(19) Europäisches Patentamt
European Patent Office
Office européen des brevets

(11) EP 4 108 709 A1

# (12) EUROPEAN PATENT APPLICATION

(43) Date of publication:
**28.12.2022 Bulletin 2022/52**

(21) Application number: **21181387.8**

(22) Date of filing: **24.06.2021**

(51) International Patent Classification (IPC):
***C08J 3/20*** *(2006.01)* ***C08J 3/22*** *(2006.01)*
***C08J 11/06*** *(2006.01)*

(52) Cooperative Patent Classification (CPC):
**C08J 3/203; C08J 3/226;** C08J 2323/06; C08J 2333/06; C08J 2429/04; C08J 2433/06

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Smart Coloring GmbH**
**52074 Aachen (DE)**

(72) Inventor: **ROBERTZ, Bernd**
**52074 Aachen (DE)**

(74) Representative: **Michalski Hüttermann & Partner Patentanwälte mbB**
**Kaistraße 16A**
**40221 Düsseldorf (DE)**

## (54) COLOR MASTERBATCH FOR PRODUCING A COLORED PLASTIC ARTICLE AND METHOD FOR DECOLORING THE COLORED PLASTIC ARTICLE

(57) The present invention is directed to a color masterbatch for producing colored plastic articles, wherein the color masterbatch comprises:
- at least one carrier,
- at least one coloring agent, and
- at least one water-soluble and/or water-swellable component;

wherein the at least one carrier is an organic polymer having a molecular weight Mw ≥ 1000 g/mol and wherein the organic polymer is insoluble in water,
wherein an amount of the water-soluble and/or water-swellable component in the color masterbatch is ≥ 1 wt% to ≤ 50 wt%, preferably ≥ 2 wt% to ≤ 25 wt%, more preferably ≥ 4 wt% to ≤ 20 wt%, even more preferably ≥ 5 wt% to ≤ 15 wt%, based on the total weight of the color masterbatch,
wherein the coloring agent is an alkali clearable dye, and wherein a weight ratio of the coloring agent to the water-soluble and/or water-swellable component in the color masterbatch is 1:2 to 1:200, preferably 1:5 to 1:50.

EP 4 108 709 A1

## Description

The present invention relates to a color masterbatch for producing colored plastic articles.

Further, the present invention relates to a mixture comprising the above color masterbatch and a plastic basis material.

Further, the present invention relates to a method for producing a colored plastic article using the above color masterbatch and to a colored plastic article.

Further, the invention relates to a method for decoloring said colored plastic article.

BACKGROUND OF THE INVENTION

Plastic articles, such as packaging and containers, are widely used in daily life, since they are easy to manufacture, rather inexpensive and lightweight. It is often desired that the plastic article has a specific color.

The coloring of plastics can be achieved by using color master batches, colored micro granules, so-called dry liquid colors or liquid colors. Colored plastic components can for example be produced from color master batch blended into a polymer prior to molding or extruding. The selection of the specific coloring method may vary based on economics, secondary operations and specific requirements of the end application.

Independent of the coloring process, the selection of the pigments and/or dyes as coloring agents depends not only on the desired color, but also on the plastic, on application, and the associated requirements, such as the use of the plastic article. In sensitive areas, such as food packaging or packaging for medicinal applications, contamination of the filling goods by a substance in the packaging must be avoided at all efforts. Furthermore, also a contamination of a user of the plastic package by a colored outer surface of the plastic package must be avoided. Hence, it is important that the dyes and/or pigments used, are immobilized and do not migrate from the plastic into the filling good or in an outer environment of the plastic article under the conditions in which the plastic article is used.

For dyes, i.e. organic molecules which are predominantly present in the colored plastic in a molecularly solved state, the prevention of migration is generally achieved by using dyes with a high molecular weight.

In the plastic industries mostly inorganic or organic pigments are used. Pigments are present in the plastic as finely distributed particles and do not migrate due to their size and particle character. Furthermore, the pigments are generally insoluble in most common solvents from water to organic solvents, oils or grease, which prevents bleeding or contact migration.

Even though pigments help producing highly color stable plastic articles, they are a disadvantage in the recycling process of the plastic article, as they cannot be removed from the plastic during mechanical recycling. The plastic articles may only be recycled at great expense by separating the articles in an additional sorting process according to their color, after having separated the articles according to the kind of plastic/polymer, in order to achieve high quality colored recycled material. When colorful plastics are mixed during regranulation, recyclates with undesirable color tones (brown, grey, black) result, so that these recyclates can only be used to a very limited extent.

In other words, environmentally friendly and high-quality recycling depends on dyes that can easily be removed from the colored plastic article. This goal may be achieved by dyes with a low molecular weight. However, since these dyes tend to migrate in the plastic even to the point of efflorescence from the plastic, their use for producing plastic articles and especially for producing food packages is very limited.

Accordingly, there is a need for plastic articles that are easily recyclable and still usable in sensitive areas, where a high color stability is needed.

SUMMARY OF THE INVENTION

It is an object of the invention to provide a color masterbatch for producing colored plastic articles, wherein the color masterbatch comprises:

- at least one carrier,
- at least one coloring agent, and
- at least one water-soluble and/or water-swellable component;

wherein the at least one carrier is an organic polymer having a molecular weight Mw ≥ 1000 g/mol and wherein the organic polymer is insoluble in water,
wherein an amount of the water-soluble and/or water-swellable component in the color masterbatch is ≥ 1 wt% to ≤ 50 wt%, preferably ≥ 2 wt% to ≤ 25 wt%, more preferably ≥ 4 wt% to ≤ 20 wt%, even more preferably ≥ 5 wt% to ≤ 15 wt%, based on the total weight of the color masterbatch,
wherein the coloring agent is an alkali clearable dye, and wherein a weight ratio of the coloring agent to the water-soluble

and/or water-swellable component in the color masterbatch is 1:2 to 1:200, preferably 1:5 to 1:50.

Furthermore, it is an object of the invention to provide a mixture of the above color masterbatch and a plastic basis material in a weight ratio of 20:80 to 1:99, preferably of 10:90 to 2:98, more preferably of 5:95 to 3:97 (color masterbatch: plastic basis material), wherein the plastic basis material comprises at least one basis polymer having a molecular weight Mw ≥ 1000 g/mol.

Furthermore, it is an object of the invention to provide a method for producing a colored plastic article comprising the steps:

a) Mixing the above color masterbatch with a plastic basis material in an extruder in a weight ratio of 20:80 to 1:99, preferably of 10:90 to 2:98, more preferably of 5:95 to 3:97 (color masterbatch: plastic basis material), wherein the plastic basis material comprises at least one basis polymer having a molecular weight Mw ≥ 1000 g/mol, or
b) Providing the above mixture in an extruder, and
c) Forming the colored plastic article by a polymer processing technique.

Furthermore, it is an object of the invention to provide a colored plastic article produced by the above method.

Furthermore, it is an object of the invention to provide a colored plastic article comprising

- a plastic basis material,
- at least one carrier,
- at least one coloring agent,
- at least one water-soluble and/or water-swellable component,

wherein the plastic basis material comprises at least one basis polymer,
wherein the amount of the plastic basis material in the colored plastic article is ≥ 80 wt% to ≤ 99 wt%, preferably ≥ 90 wt% to ≤ 98 wt%, more preferably ≥ 95 wt% to ≤ 97 wt%, based on the total weight of the colored plastic article,
wherein the amount of the at least one water-soluble and/or water-swellable component in the colored plastic article is ≥ 0.01 wt% to ≤ 10 wt%, preferably ≥ 1 wt% to ≤ 8 wt%, more preferably ≥ 2 wt% to ≤ 4 wt%, or even more preferably ≥ 0.15 wt% to ≤ 0.75 wt%, based on the total weight of the colored plastic article,
wherein the at least one basis polymer and the at least one carrier is an organic polymer having a molecular weight Mw ≥ 1000 g/mol and wherein the carrier is insoluble in water,
wherein the coloring agent is an alkali clearable dye, and
wherein a weight ratio of the coloring agent to the water-soluble and/or water-swellable component in the colored plastic article is 1:2 to 1:200, preferably 1:5 to 1:50.

The color masterbatch, the mixture of the color masterbatch and the plastic basis material, the method for producing the colored plastic article, and the colored plastic article have the advantage that the colored plastic article has a high color stability under use conditions and can be decolored under recycling conditions.

Furthermore, it is an object of the invention to provide a method for decoloring the above plastic article, comprising the steps of

a) shredding the colored plastic article to a granulate and/or a powder,
b) exposing the granulate and/or powder to a decoloring bath for about ≥ 1 minute to about ≤ 240 minutes, preferably about ≥ 5 minute to about ≤ 180 minutes, more preferably about ≥ 10 minute to about ≤ 60 minutes, wherein the decoloring bath has a temperature above a glass transition temperature $T_g$ of the colored plastic article and below a melting temperature $T_m$ of the colored plastic article and/or has a temperature ≥ 80 °C to ≤ 130 °C,
wherein the decoloring bath comprises

- water, and
- at least one polar solvent,
  wherein the decoloring bath has a pH about ≥ 10, preferably about ≥ 11, more preferably about ≥ 12, and wherein the pH of the decoloring bath is adjusted by adding a base, preferably NaOH.

The basic idea of the invention is to use alkali clearable dyes in combination with water soluble and/or water swellable components in a color masterbatch, in a mixture of the color masterbatch and a plastic basis material and/or in a plastic article. The alkali clearable dyes as coloring agents have the advantage that they provide highly color stable plastic articles under use conditions, since the alkali clearable dyes have a low tendency for migration. Furthermore, since the alkali clearable dyes can by hydrolyzed, the plastic article can be decolored in the decoloring bath. However, in order to exploit the advantage of alkali clearable dyes, the decoloring bath must be able to attack the alkali clearable dye. Since most plastics in which the alkali clearable dye is incorporated are usually resistant to water, alkalis or acids,

water-soluble and/or water-swellable components are incorporated in the colored plastic article in an amount ≥ 0.01 wt%, preferably ≥ 1 wt%, more preferably ≥ 2 wt%, or even more preferably ≥ 0.15 wt%, based on the total weight of the colored plastic article. Accordingly, the water-soluble and/or water-swellable components are incorporated in the color masterbatch, which is used to produce the colored plastic article in an amount of ≥ 1 wt%, preferably ≥ 2 wt%, more preferably ≥ 4 wt%, or even more preferably ≥ 5 wt%, based on the total weight of the color masterbatch. These water-soluble and/or water-swellable components ensure that the colored plastic article and the plastic article produced with the color masterbatch dissolves and/or swells, when contacted with the decoloring bath and thus the decoloring bath can access the alkali clearable dye. However, if the water-soluble and/or water-swellable components are present in a high amount in the plastic article and in the color masterbatch, the usability of the colored plastic article and of the plastic article produced with the color masterbatch is impaired. Thus, the amount of water-soluble and/or water-swellable component is limited to ≤ 10 wt%, preferably to ≤ 8 wt%, more preferably to ≤ 4 wt%, or even more preferably to ≤ 0.75 wt%, based on the total weight of the colored plastic article. Accordingly, in the color masterbatch the amount of water-soluble and/or water-swellable component is limited to ≤ 50 wt%, preferably ≤ 25 wt%, more preferably ≤ 20 wt%, even more preferably ≤ 15 wt%, based on the total weight of the color masterbatch. In order to ensure the decolorability of the colored plastic article and of the plastic article produced with the color masterbatch, the weight ratio of the coloring agent to the water-soluble and/or water-swellable component in the color masterbatch as well as in the plastic article is 1:2 to 1:200, preferably 1:5 to 1:50.

With regard to the method for producing the colored plastic article, it is also possible to dose a color masterbatch not comprising a water-soluble and/or water-swellable component and the water-soluble and/or water-swellable component separately in the manufacturing process of the plastic article, thus achieving the mixture of the color masterbatch and the plastic basis material. However, in manufacturing processes of plastic articles, usually only single-screw extruders are used, whose disintegration and mixing performance are significantly lower compared to the twinscrew extruders used in the production of the color masterbatches. The separate dosing of a color masterbatch not comprising a water-soluble and/or water-swellable component and the water-soluble and/or water-swellable component in the manufacturing process of a plastic article therefore harbors the risk of insufficiently intimate mixing, so that decolorization of the plastic article in a decolorization process may be impaired.

Thus, using the color masterbatch a highly color stable and still decolorizable plastic article can be produced. The alkali clearable dyes as coloring agents in combination with the water-soluble and/or water-swellable compound make an easy and environmentally friendly recycling of the colored plastic article possible, making use of the hydrolyzation and/or saponification of the alkali clearable dye in the decoloring bath.

Preferably, the method for decoloring the colored plastic article allows to recover at least 85 % of the plastic basis material of the plastic article and allows to reuse the plastic basis material for producing further plastic articles. Furthermore, the recycling does not rely on dissolving the plastic basis material in an organic solvent, but rather on a disintegration process of the plastic article and the conversion of the alkali clearable dyes into water soluble compounds in the decoloring bath.

## Coloring agent

As already mentioned, the coloring agent in the color masterbatch, in the mixture of the color masterbatch and the plastic basis material, and in the colored plastic article is an alkali clearable dye. Alkali clearable dyes are coloring agents that have been introduced in textile dying around 1976 for the purpose of exhaust dyeing polyester cellulosic (PC) blended fabrics. In the presence of an alkali, the alkali clearable dyes are hydrolyzed to the corresponding hydrolyzed form, which is highly water soluble. In the exhaust dying of textiles, the alkali-clearable dye is hydrolyzed during the alkaline wash-off process carried out to remove unfixed dyes, which leads to an increased color fastness of the dyed textile. Thus, alkali clearable dyes have helped to replace the reduction-cleared process in textile dying by an alkali-cleared process to avoid environmentally harmful sulphur compounds as reducing agents.

In the present invention, alkali clearable dyes are understood to be all dyes which can be hydrolyzed under alkaline conditions and convert to water soluble forms.

An advantage of using alkali clearable dyes as coloring agent for plastic articles is that the alkali clearable dye has a low tendency to migrate within the plastic article. Thus, high color stability of the colored plastic article can be achieved. Furthermore, alkali clearable dyes can easily be processed, meaning that alkali clearable dyes are easily dispersible in fatty media or dry mixtures. Alkali clearable dyes are stable at a pH < 8 and generally have a high light and heat resistance. Furthermore, the alkali clearable dyes can be converted to water soluble forms by alkaline treatment, thus the plastic article can be decolorized under specific decolorizing conditions in which the alkali clearable dyes hydrolyze, in order to exploit the solubility of the hydrolyzed form in water.

According to a preferred embodiment of the invention the alkali clearable dye is an organic molecule comprising at least one functional group selected from the group comprising carboxylic ester group, phtalimide group, fluorosulfonyl group thiophene group and nitrothiophene group. Alkali clearable dyes having one or more of the above-mentioned

functional group are easily hydrolyzed to water soluble forms. In alkali clearable dyes having a fluorosulfonyl group, the fluorosulfonyl group can be converted to the water soluble $SO_3Na$ group, enabling a decoloring in mild alkaline conditions.

In principle the alkali clearable dye can be selected from the group comprising phthalocyanine, polymethine, anthraquinone, indanthrone, monoazo, diazo, methine, quinophthalone, perinone, naphthalidimide, indigo and thioindigo dyes. Preferably the alkali clearable dye is preferably an organic molecule having an aromatic structure and/or a diazinyl group. Further preferably the alkali clearable dye has a molecular weight Mw in the range of about ≥ 250 g/mol to about ≤ 800 g/mol.

The alkali clearable dye may be a ready-to-use alkali clearable dye, i.e., an alkali clearable dye comprising additives to ensure a homogenous distribution of the alkali clearable dye in the color masterbatch. Alternatively, the alkali clearable dye may be an alkali clearable dye not comprising any additive.

According to a further preferred embodiment of the invention the alkali clearable dye has a pure dye content of 10 wt% to 100 wt%, preferable 15 wt% to 90 wt%, based on the weight of the alkali clearable dye. The further components in the alkali clearable dye do not impair the color masterbatch, the mixture, and/or the colored plastic article.

More preferably the alkali clearable dye is selected from the group comprising the following chemical formulas A1 to A21 according to table 1:

**Table 1**

| Description | Chemical structure of the alkali clearable dye |
|---|---|
| A1: Disperse Red 278<br>CAS: 68248-10-2;<br>$C_{22}H_{25}N_5O_7$;<br>471.46 g/mol | 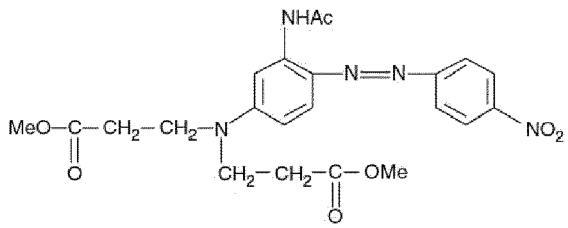 |
| A2: Disperse Brown 19<br>CAS: 71872-49-6;<br>$C_{20}H_{20}Cl_2N_4O_6$;<br>482 g/mol | 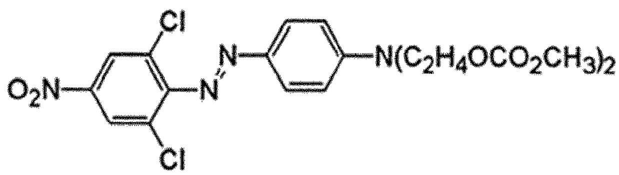 |
| A3: Disperse Orange 30<br>CAS: 5261-31-4;<br>$C_{19}H_{17}Cl_2N_5O_4$;<br>450.3 g/mol | 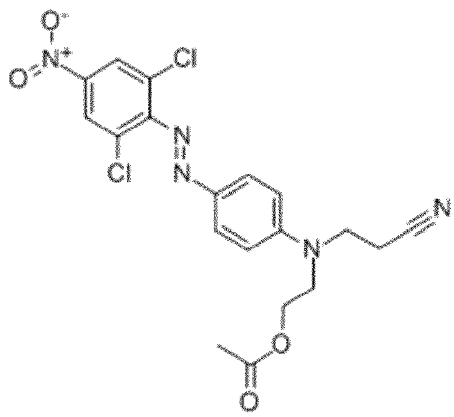 |

(continued)

| Table 1 | |
|---|---|
| Description | Chemical structure of the alkali clearable dye |
| A5: BEMACRON BLAU HP-LTD<br>CAS 58547-80-1;<br>$C_{22}H_{29}Cl_2N_5O_5S$;<br>546.47 g/mol | 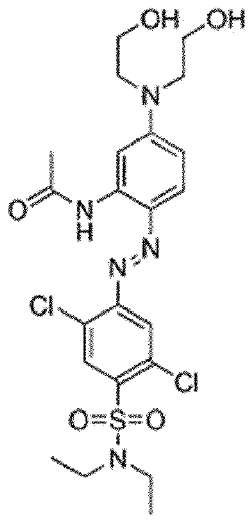 |
| A6: Bemacron Rot HP-LTD 01<br>CAS: 149850-30-6;<br>$C_{21}H_{20}N_6O_7$,<br>468.42 g/mol: | 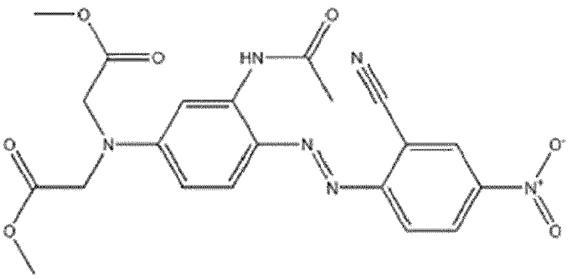 |
| A7: Bemacron Gelb HT-LTD01<br>CAS: 70528-90-4;<br>$C_{15}H_{12}ClN_5O_4$;<br>361.74 g/mol; | 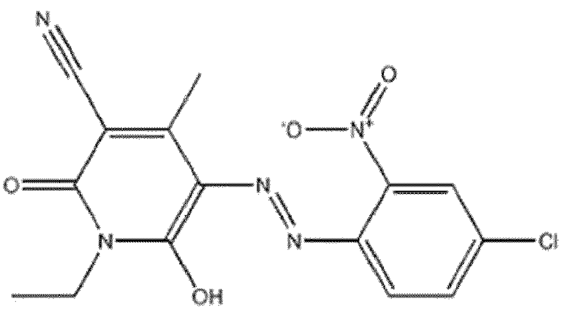 |
| A8 | 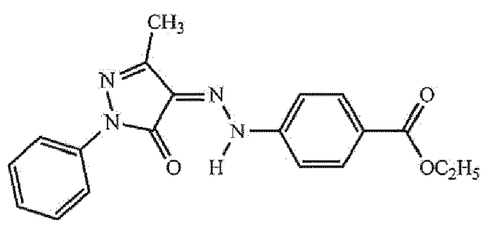 |
| A9:<br>X = {alkyl, aryl, phenyl}<br>Y = {alkyl} | 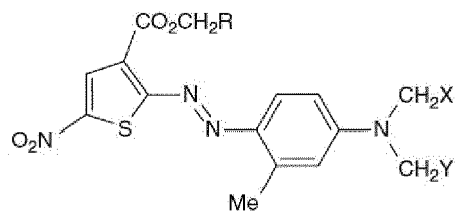 |

(continued)

| Table 1 | |
|---|---|
| Description | Chemical structure of the alkali clearable dye |
| A10 | 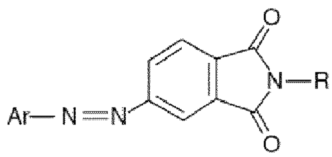 |
| A11<br>R1 to R5 = {alkyl, aryl} | 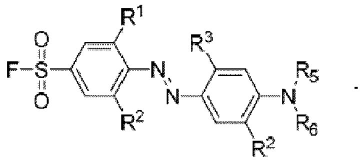 |
| A12<br>X = $SO_2F$<br>R= {aryl, alkyl} | 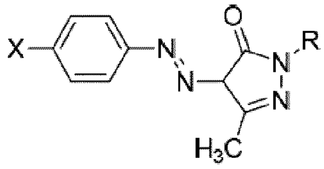 |
| A13 | 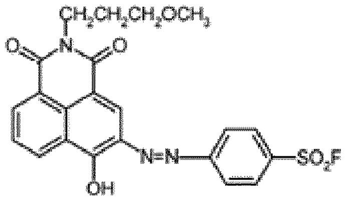 |
| A14 | 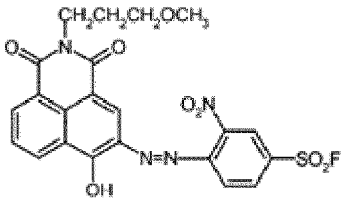 |
| A15 | 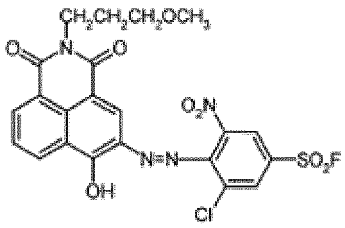 |
| A16: Disperse Green 9<br>CAS 71627-50-9,<br>$C_{16}H_{18}N_6O_5S$,<br>406.42 g/mol | 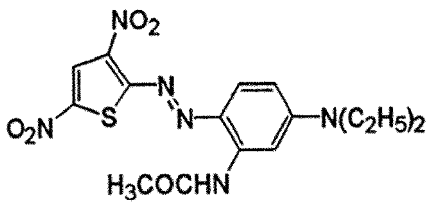 |

(continued)

| Table 1 | |
|---|---|
| Description | Chemical structure of the alkali clearable dye |
| A17<br>X = {$COCOCH_3$, $CO_2CH_2$}<br>Y = {H, NHAc} | 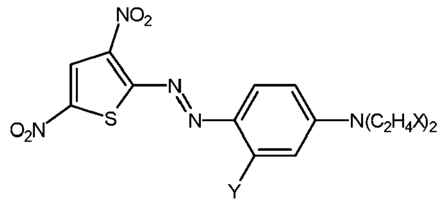 |
| A18<br>X, Y = {alkyl, aryl, phenyl, $C_2H_4Ph$} | 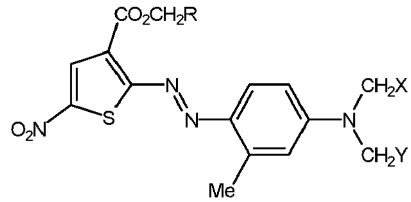 |
| R= {H, Alkyl, $CH_2OEt$} | |
| A19<br>X = {$COCOCH_3$, $CO_2CH_2$} | 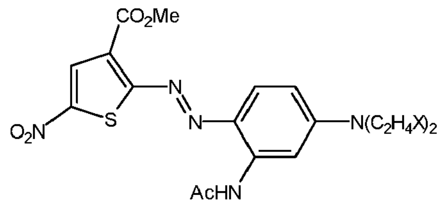 |
| A20<br>X = N; Y= H; Z = $NO_2$; or<br>X = C-$NO_2$, Y=H, Z=$NO_2$ | 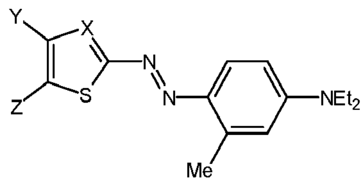 |
| A21 | 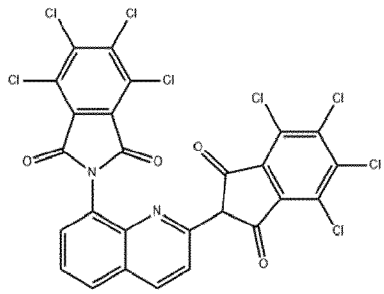 |

## Carrier

As already mentioned, the carrier is an organic polymer having a molecular weight Mw ≥ 1000 g/mol, preferably Mw ≥ 1200 g/mol, more preferably Mw ≥ 1500 g/mol and wherein the organic polymer is insoluble in water.

In the context of this invention being insoluble in water means that the organic polymer does not dissolve and/or disperse in water.

Dissolution and/or dispersion of organic polymers in water lead to a change of the physical properties of the water. Thus, preferably in the context of the invention not being soluble and/or dispersible means that the viscosity of the water, determined by EN ISO 3219 does not change for more than 1 % and/or conductivity, determined by DIN EN 27888 of the water does not change for more than 5 % due to the presence of the 1 platelet according to ISO 294-3 (cavity dimensions: W x L x T = 62 x 62 x 1.1 $mm^2$) of the organic polymer in 100 g distilled water.

Furthermore, in the context of this invention being insoluble in water also means that the organic polymer does not swell in water. Since many polymers absorb water or moisture to some degree which may lead to swelling, in the

context of the invention not swelling in water means, that the water absorption of the organic polymer is < 5 wt%, determined by ASTM D570 or ISO 62. In other words, not swelling in water means that the increase in weight percent due to water absorption is < 5 wt% for the carrier.

In general, the carrier may be any polymer or any mixture of polymers and may be selected according to the use of the plastic article and or the material of the plastic article that is to be colored by the color masterbatch. Preferably, the carrier is chosen to be compatible with the plastic basis material of the mixture and/or of the plastic article that is to be colored by the color masterbatch. The carrier may be the same as the plastic basis material of the mixture and/or the plastic article that is to be colored by the color masterbatch. It is possible that the color masterbatch comprise one carrier. However, it is also possible that the color masterbatch comprises more than one carrier, for example a first carrier and a second carrier, wherein the first carrier is selected different to the second carrier.

According to a preferred embodiment of the invention the carrier is selected from the group comprising thermoplastic and thermoplastic elastomer and/or the carrier is not a thermosetting polymer.

Preferably the carrier is selected from the organic polymers comprising poly(methyl methacrylate) (PMMA), poly methacrylate (PMA), poly(ethyl methacrylate) (PEMA), poly ethylacrylate (PEA), poly buylacrylate, poly (vinyl acetate) (PVA), polypropylene (PP), polyethylene (PE), polyoxymethylene (POM), polystyrene (PS), polyurethane (PU), silicone, and acrylonitrile butadiene styrene (ABS), polyalkylenes, polybutylene (PB). Furthermore, the carrier may be co-polymers of the aforementioned organic polymers.

Preferably the carrier is selected from the organic polymers comprising

- polyacrylate with methyl (polymethylacrylate), ethyl (polyethylacrylate), propyl (polypropylacrylate), or butyl (polybutylacrylate),
- polymethacrylate with methyl (polymethylmathacrylate), ethyl (polyethylmethacrylate), propyl (polypropylmethacrylate), or butyl (polybutylmethacrylate),
- copolymers of acrylic and methacrylic esters including, among others, *n*-Butyl and *tert*-Butyl (meth)acrylate, pentyl(meth)acrylate and 2-ethylhexyl(meth)acrylate; (Meth)acrylates derived from unsaturated alcohols, preferably oleyl(meth)acrylate, 2-propynyl(meth)acrylate, allyl(meth)acrylate, vinyl(meth)acrylate;
- aryl(meth)acrylates polymers, preferably benzyl(meth)acrylate polymers or phenyl(meth)acrylate polymers, the aryl radicals each being unsubstituted or up to four times substituted;
- cycloalkyl(meth)acrylates polymers, preferably 3-vinylcyclohexyl(meth)acrylate polymers, bornyl (meth)acrylate polymers;
- hydroxylalkyl (meth)acrylates polymers, preferably 3- hydroxypropyl (meth)acrylate polymers, 3,4- dihydroxybutyl(meth)acrylate polymers, 2-hydroxyethyl(meth)acrylate polymers, 2-hydroxypropyl(meth)acrylate polymers;
- aminoalkyl (meth)acrylates, preferably 2-aminoethyl (meth)acrylate polymers
- glycol di(meth)acrylates polymers, preferably 1,4-butanediol (meth)acrylate polymers;
- (meth)acrylates of ether alcohols polymers, preferably tetrahydrofurfuryl (meth)acrylate polymers, vinyloxyethoxyethyl(meth)acrylate polymers;
- acrylonitrile polymers;
- vinyl ester polymers, preferably vinyl acetate polymers;
- styrene polymers, substituted styrenes polymers with an alkyl substituent in the side chain, preferably α-methylstyrene and α-ethylstyrene, substituted styrenes polymers with an alkyl substituent on the ring, preferably vinyl toluene, and *p*-methylstyrene, halogenated styrene polymers, preferably monochlorostyrene polymers, dichlorostyrene polymers, tribromostyrene polymers and tetrabromostyrene polymers;
- polymers of vinyl and isoprenyl ethers;
- maleic acid polymers, preferably maleic anhydride polymers, methyl maleic anhydride polymers, maleimide polymers, methyl maleimide;
- copolymers of ethylene and propylene with acrylic esters, preferably polyethylen-block-co-polymethylmethacrylat, polypropylen-block-co-polymethylmethacrylat;
- polyurethane (PU),
- polyacrylnitril and polyacrylnitril-copolymers, preferably poly acrylonitrile butadiene styrene (ABS), poly styrene-acrylonitrile;
- polystyrene and polystyrene copolymers, preferably styrene/butadiene co-polymer (SBR), poly styrene-isoprene-styrene (SIS), poly(glycidyl methacrylate) grafted sulfonamide based polystyrene resin with tertiary amine;
- ethylene-vinyl acetate;
- poly(1-naphthylamine)-camphorsulphonic acid.

Other organic polymers such as amorphous co-polyester, which can be used as carriers are known under the tradename Akestra 90, 100 and 110.

**Water-soluble and/or water-swellable component**

As already mentioned, the color masterbatch, the mixture, and the colored plastic article comprises a water-soluble and/or water-swellable component in order to enable decolorability of the colored plastic article. The water-soluble and/or water-swellable component is preferably a compound that dissolves, disperses, and/or swells in water and/or under the conditions present in the decoloring bath. Thus, the decoloring bath can access the alkali clearable dye within the colored plastic article.

To this regard, the water-soluble and/or water-swellable component is preferably a water-soluble polymer, a water-swellable compound, a disintegrating agent, or mixtures thereof.

With regard to the recyclability of the colored plastic article, which may be produced with the color masterbatch, the water-soluble polymers have the advantage that they dissolve in the decoloring bath in the decolorizing process and thus after decolorization these polymers are not present in the plastic article any more or only to a negligible extent. Thus, a contamination of the decolorized plastic with the water-soluble polymers is avoided and the recyclability of the plastic article is increased. In contrast, the water-swellable compounds remain in the plastic even after decolorization, thus impairing the recyclability of the plastic article. However, the water-swellable compounds have the advantage of ensuring higher color stability, compared to water-soluble polymers. Furthermore, since the water-soluble polymers wholly or partially dissolve in the decoloring bath, they contaminate the decoloring bath. However, purification of the decoloring bath is possible by standard processes involving precipitation reactions and/or flocculation.

Water-soluble polymer

According to a preferred embodiment of the invention the water-soluble polymer has a molecular weight Mw $\geq$ 1000 g/mol, preferably Mw $\geq$ 1200 g/mol, more preferably Mw $\geq$ 1500 g/mol.

In the context of this application, a polymer is considered water soluble if the weight loss of a sample of the water-soluble polymer according to ISO 294-3 (cavity dimensions: W x L x T = 62 x 62 x 1.1 $mm^2$) is more than 2 wt% when stored or treated according to either of the following method 1 or method 2. The weight loss in % is calculated according to:

$$weight\ loss\ in\ \% = \frac{conditioned\ weight\ after\ test - conditioned\ weight\ before\ test}{conditioned\ weight\ before\ test}\ x\ 100$$

Before testing the specimens are dried in an oven at 60°C for 48h and then placed in a desiccator to cool. Immediately upon cooling the specimens are weighed.

For method 1 the specimens are then emerged in 500 mL of water at 23°C for 24 hours. Specimens are removed, patted dry with a lint free cloth, and weighed.

For method 2 the specimens are then emerged in 500 mL of boiling water (100 °C) for 30 min. Specimens are removed, patted dry with a lint free cloth, and weighed.

Water-soluble polymers usually have hydrophilic groups as substituents and/or incorporated into the backbone of the polymer. The hydrophilic groups may be nonionic, anionic, cationic or amphoteric. In other words, the monomer units of water-soluble polymers have a significantly higher number of heteroatoms such as nitrogen (N), oxygen (O), sulfur (S) or halogens (esp. F, Cl, Br) compared to water insoluble polymers. This results in a higher polarity and thus better solubility compared to insoluble polymers.

According to a preferred embodiment of the invention the water-soluble polymer is selected from the group comprising polyelectrolytes, non-ionic polymers, hydrophobic-associating polymers, and water soluble polysiloxanes.

a) Polyelectrolytes

Polyelectrolytes are polymers that have charged groups. They can be divided into polycations (positively charged), polyanions (negatively charged) or amphoteres (zwitterions, positively and negatively charged). Polyelectrolytes include proteins, but also numerous synthetically produced polymers.

Useful polyelectrolytes include but are not limited to poly carboxylic acids (collective term), poly acrylic acid (carbomer), poly methacrylic acids, poly maleic acid, maleic acid co- and terpolymers, poly sulfonic acids such as sodium poly styrene sulfonat, acrylic ester-acrylic acid copolymers as available from Belland Technology, sulfonated acrylic copolymers, poly vinyl sulphuric acid, phosphino poly carboxylates, poly phosphoric acids, alginates, ligno sulphonates, naphtyl sulphonates, Pectins, quaternary polyamines (collective term), partially hydrolyzed polyacrylamide (HPAM), acrylamide copolymers, poly vinyl amines, poly ethylene imines, polyquaternium especially Polyquaternium 6 (pDADMAC), dicyandiamide resins, cationic starch, poly vinyl pyridine, poly vinyl ammonium chloride, poly saccharides, acrylamide-acrylic acid-DMAEA-MeCl or DADMAC-acrylic acid, polybetaines in which the charges are paired.

b) Water-soluble non-ionic polymers

Preferably the group of water-soluble non-ionic polymers include but are not limited to polyethylene oxides, polyethylene oxide-polypropylene oxide copolymers, poly amide, poly-N-vinyl pyrrolidone, (N)-vinyl pyrrolidone-vinyl imidazole-copolymers, poly vinyl alcohol (PVAL or PVOH), polyacrylamide (PAM), acrylamide copolymers or poly (vinylmethyl ether) (PVME).

c) Water-soluble hydrophobically associating polymers

Water-soluble hydrophobically associating polymers (AP) are water-soluble polymers that contain a small number i.e. < 1 mol% of hydrophobic groups attached directly to the polymer backbone.

d) Water soluble polysiloxanes

Water soluble polysiloxanes are polymerised siloxanes or polysiloxanes, which are inorganic-organic polymers with a silicon-oxygen backbone.

Useful water-soluble polymers are available under the tradename Mowiflex from Kuraray Europe GmbH, or Sokalan from BASF SE. Kuraray Europe GmbH defines certain temperatures (30, 50 or 70°C) for their polyvinyl alcohols at which the polymers first become water-soluble (Mowiflex).

Water-swellable compound

According to a preferred embodiment of the invention, the water-swellable compound is an inorganic compound or is a polymer having a molecular weight Mw ≥ 1000 g/mol, preferably Mw ≥ 1200 g/mol, more preferably Mw ≥ 1500 g/mol, wherein the water-swellable compound has a swelling capacity of ≥ 25 wt%, preferably ≥ 100 wt%, more preferably ≥ 200 wt%.

The swelling capacity of the water-swellable compound is determined according to ASTM D570 or ISO 62. Water-swellable compound are usually crosslinked polymer networks that have hydrophilic groups as substituents and/or incorporated into the backbone of the polymer. Because of the inherent cross-links, the water-swellable compound preferably does not dissolve in water.

Furthermore, instead of polymers inorganic compounds that show a high swelling capacity can be used as water-swellable compounds, especially phyllosilicates such as bentonite, preferably montmorillonite.

In principle, all the above-mentioned water-soluble polymers that can be covalently or ionically crosslinked are swellable in their crosslinked form. The swelling capacity in a solvent or swelling agent such as water is determined, among other things, by their degree of cross-linking.

According to a preferred embodiment of the invention the water-swellable compound is selected from the group comprising bentonite, preferrebly montmorillonite; cross-linked poly acrylamide and its copolymers, starch, cellulose, cellulose derivatives such methyl cellulose (MC), microcrystalline cellulose (MCC), hydroxypropylmethyl cellulose (HPMC), ethylhydroxyethyl cellulose (MHEC), hydroxypropyl cellulose (HPC), hydroxyethyl cellulose (HEC), sodium carboxymethyl cellulose (NaCMC) and carboxymethylcellulose; crosscarmellose, sodium croscarmellose, crospovidone, sodium starch glycolate. alginic acids, dextrans and cross-linked polyvinylpyrrolidones, cross-linked poly(vinyl alcohol) and copolymers such as Ethylene-vinyl alcohol copolymers with different degrees of saponification, cross-linked polyethylene oxide and starch grafted copolymer of polyacrylonitrile.

Useful water-swellable compounds are available under the tradenames Ac-Di-Sol from DuPont de Nemours, Disolcel from chemopharma Chemikalien- und Pharmazeutika Handelsges.m.b.H., Solutab from Roquette Frères, Vivasol from JRS PHARMA GmbH & Co. KG.

Disintegrating agent

Furthermore, there are compounds whose solubility is dependent on the conditions of the solvent e.g. its pH or the solubility is produced by a chemical reaction between the component and the solvent, since only a chemical reaction between the compound and the solvent leads to the dissolution of the compound. For example, some manufacturers specify specific pH values for their polymers at which the polymers first become water-soluble (e.g. various BellandPolymers types from Belland Technology: Belland Polymer 88410; soluble at pH > 10).

Accordingly, the disintegrating agent can be a polymer having a molecular weight Mw ≥ 1000 g/mol, preferably Mw ≥ 1200 g/mol, more preferably Mw ≥ 1500 g/mol, that is only soluble in water below or above a specific pH values

e.g. through the conversion of acids to the corresponding salts in an alkaline environment or the conversion of amines into ammonium groups in an acidic environment.

In the context of this application, a polymer is considered a disintegrating agent, when the weight loss of a sample of the disintegrating agent according to ISO 294-3 (cavity dimensions: W x L x T = 62 x 62 x 1.1 $mm^2$) is more than 2 wt% when treated according to the following method 3. The weight loss in % is calculated according to:

$$weight\ loss\ in\ \% = \frac{conditioned\ weight\ after\ test - conditioned\ weight\ before\ test}{conditioned\ weight\ before\ test}\ x\ 100$$

Method 3: Before testing the specimens are dried in an oven at 60°C for 48h and then placed in a desiccator to cool. Immediately upon cooling the specimens are weighed. Afterwards the specimens are emerged in 500 mL of water having a pH ≥ 10 or a pH ≤ 4 for 24 hours at 80°C. Specimens are removed, patted dry with a lint free cloth, and weighed.

According to a preferred embodiment of the invention, the disintegrating agent is selected from the group comprising poly glycolide, polylactide, poly hydroxy propionate, poly hydroxy butyrate, poly ε-caprolactone, glycolized or amorphous aliphatic-aromatic polyesters, glycolized or amorphous polyethylene terephthalate (PET-G or A-PET), polytrimethylenterephthalte (PTT) polybutylenterephthalate (PBT), poly acrylate-acrylic acid copolymers soluble at a pH ≥ 10, and blends of poly acrylate-acrylic acid copolymers with poly ethylene acrylic acids soluble at a pH ≥ 10.

Useful disintegration agents are also available under the tradename Belland Polymers from Belland Technology.

In the case of saponification of esters, further additives can be added to the decoloring bath that accelerate the saponification of the esters, such as quaternary ammonium compounds like Peristal PEA available from Textilchemie Dr. Petry GmbH.

## Further components

The color masterbatch, the mixture, and the colored plastic article may comprise further components that enhance the accessibility of the decoloring bath to the coloring agent, and thus improve the decolorability of the colored plastic article. Such further components can be substances that generate gases when coming into contact with the decoloring bath, organic acids and/or salts.

a) organic acids and salts

According to a preferred embodiment the color masterbatch, the mixture, and the colored plastic article may comprise further components that enhance the accessibility of the decoloring bath to the coloring agent, and thus improve the decolorability of the colored plastic article.

According to the above and according to a preferred embodiment of the invention, the color masterbatch further comprises in an amount of ≥ 0.1 wt% to ≤ 25 wt% based on the total weight of the color masterbatch

- an organic acid having a melting point $T_m$ > 100 °C and a solubility in double-distilled water and/or alkaline solution > 0.1 kg/L at 25 °C, such as tartaric acid, citric acid; amino- or hydroxy- substituted straight, branched, saturated and/or unsaturated, aliphatic $C_5$ to $C_9$ carboxylic acids such as hydroxyvaleric acid and hydroxycaproic acid, $C_4$ to $C_7$ dicarbonic acids like glutaric acid or adipic acid; and/or
- a salt selected from the group comprising

  a) inorganic salts of alkali metals, alkaline earth metals, and/or elements of the 3rd main group of the PSE such as sodium chloride and sodium nitrate;
  b) organic salts of alkali metals and/or alkaline earth metals of carboxylic acids such as acetate, citrate, tartrate, and branched, saturated and/or unsaturated, aliphatic $C_5$ to $C_9$ carboxylic acids such as valeric acid and caproic acid; and
  c) hydroxides of alkali metals, alkaline earth metals, and Aluminum, such as NaOH, $Mg(OH)_2$, and $Al(OH)_3$.

The organic acid having a melting point $T_m$ > 100 °C as well as the salts have the advantage that they do not cause problems when the color masterbatch and/or the mixture comprising the color masterbatch is processed in an extruder at elevated temperatures. The solubility in double-distilled water and/or alkaline solution allows that the organic acid dissolve under the decoloring conditions. Solubility in alkaline solution refers to an NaOH solution having pH ≥ 10. Compared to the gas generators, the organic acids and the salts do not produce gas when dissolving in the decoloring bath.

Since the organic acids and the salts may have influence on the density of the plastic article, the amount organic

acids and/or the salts in the color masterbatch is preferably limited to ≤ 25 wt% based on the total weight of the color masterbatch. Accordingly, the colored plastic article produced with the color masterbatch may comprise in an amount of ≥ 0.001 wt% to ≤ 5 wt%, preferably ≥ 0.01 wt% to ≤ 1 wt%, more preferably ≥ 0.02 wt% to ≤ 0.1 wt% based on the total weight of the color plastic article the organic acids and/or the salts.

b) Gas generators

Furthermore, compounds that produce gas when reacting may also be used in the color masterbatch, the mixture, and the colored plastic article. According to a preferred embodiment of the invention the color masterbatch further comprises in an amount of ≥ 0.1 wt% to ≤ 10 wt% based on the total weight of the color masterbatch a gas generator selected from the group comprising hydrogen carbonates and carbonates such as $NaHCO_3$ and $Na_2CO_3$. Accordingly, the colored plastic article produced with the color masterbatch may comprise in an amount of ≥ 0.001 wt% to ≤ 2 wt%, preferably ≥ 0.01 wt% to ≤ 1 wt%, more preferably ≥ 0.02 wt% to ≤ 0.1 wt% based on the total weight of the color plastic article the gas generator.

**Crosslinking agent**

According to a preferred embodiment of the invention, the color masterbatch further comprises a crosslinking agent in an amount of ≥ 0.1 wt% to ≤ 10 wt%, preferably ≥ 0.5 wt% to ≤ 5 wt%, more preferably ≥ 1 wt% to ≤ 3 wt%, based on the total weight of the color masterbatch.
According to a preferred embodiment of the invention, the colored plastic article further comprises a crosslinking agent in an amount of ≥ 0.001 wt% to ≤ 2 wt%, preferably ≥ 0.01 wt% to ≤ 1 wt%, more preferably ≥ 0.02 wt% to ≤ 0.5 wt% even more preferably ≥ 0.03 wt% to ≤ 0.15 wt%, based on the total weight of the colored plastic article.
Preferably the crosslinking agent is selected from the group comprising glycidyl acrylates copolymers, maleic acid anhydride copolymers, polymers and copolymers grafted with maleic acid anhydride, like of PE, PP or EMA grafted with maleic anhydride, glyoxal, glyoxal resins, polyamidoamin epichlohydrine, modified or non-modified melamine formaldehyde resins, Ti-lactate, boric acid, sodium aluminate, ammonium zirconium carbonate and polyvalent cations such as $Ca^{2+}$, $Mg^{2+}$ or $Al^{3+}$.
Crosslinking agents have reactive groups that react with the functional groups of the water-soluble polymers to from covalent or ionical bonds. Since both the crosslinking agent and the water-soluble polymer have numerous functional groups, depending on the dosage and functionality of the crosslinker, a more or less dense three-dimensional network is formed and the water-soluble polymer is converted into a water-swellable polymer.
Preferably, the crosslinking agent is a polymer that is compatible with the carrier of the color masterbatch, so that the crosslinking agent simultaneously fulfills the functionality of a compatibilizer. Useful crosslinking agents are available under the tradename Orevac or Lotader from Arkema or Yparex from The Compound Company.
Many anionic polyelectrolytes are water-soluble in the form of their Na salts, but not in the form of the salts of polyvalent cations such as $Ca^{2+}$, $Mg^{2+}$ or $Al^{3+}$. Thus, a cross-linking reaction can take place due to ionic interactions.
The crosslinking agents are added to the color masterbatch according to the degree of cross-linking to be achieved, preferably in quantities of 0.1 to 10 wt%, more preferably of 0.5 to 5 wt% and especially preferably of 1 to 3 wt%.
The crosslinking agent can also be used in the form of a crosslinking-masterbatch comprising additional additives or without any additional additives. The dosage of a crosslinking-masterbatch depends on the loading of this crosslinking-masterbatch and is adapted according to the dosage of the pure crosslinker.
In order to avoid the formation of flocks due to the crosslinked polymers, the crosslinking agent can also be added during the production of the plastic article parallel to the color masterbatch, either in pure form as crosslinking agent or, as a rule, as a crosslinker-masterbatch. In both cases the relative dosage of the crosslinking agent in the plastic article corresponds to the dosage of the crosslinking agent added within the color masterbatch.
The crosslinking agents are present in the colored plastic article in quantities of 0.001 wt% to 2 wt%, more preferably of 0.01 wt% to 1 wt%, more preferably ≥ 0.02 wt% to ≤ 0.5 wt% even more preferably ≥ 0.03 wt% to ≤ 0.15 wt%, based on the weight of the colored plastic article.

**Dispersing agent**

In order to improve mixing behavior of the alkali clearable dye within the color masterbatch and thus also within the plastic basis material, the color masterbatch preferably comprises a dispersing agent. The dispersing agent preferably enhances the processability of the alkali clearable dye, the color masterbatch, the mixture of the color masterbatch and the plastic basis material, and thus the color homogeneity of the colored plastic article.
To this regard and according to a preferred embodiment of the invention, the color masterbatch further comprises the dispersing agent in an amount of ≥ 0.0005 wt% to ≤ 50 wt%, preferably ≥ 0.1 wt% to ≤ 14 wt%, more preferably ≥

1.2 wt% to ≤ 3 wt%, based on the total weight of the color masterbatch, wherein the dispersing agent is selected from the group comprising ionic dispersing agents, and non-ionic dispersing agents.

Furthermore, according to a preferred embodiment of the invention, the colored plastic article further comprises the dispersing agent in an amount of ≥ 0.000005 wt% to ≤ 10 wt%, preferably ≥ 0.001 wt% to ≤ 5 wt%, more preferably ≥ 0.01 wt% to ≤ 0.5 wt%, even more preferably ≥ 0.012 wt% to ≤ 0.12 wt%, based on the total weight of the colored plastic article, wherein the dispersing agent is selected from the group comprising ionic dispersing agents, and non-ionic dispersing agents.

Preferably the dispersing agent is selected from esters and hydrocarbons, aromatic and non-aromatic carboxylic acid esters, such as glycerin triacetate , acetyltributylcitrate (ATBC), ethyl acrylate, penta erythritol esters such as pentaerythritol mono-, di-, tri or tetrastearate or pentaerythritol mono-oleate, montanic acid ester, aliphatic esters of $C_4$- $C_7$ dicarboxylic acids, preferably adipic acid dibutylester and glutaric acid dibutlyester, fatty acid esters, ethoxylated fatty acid, poly oxyethylated compounds derived from sorbitol and oleic acid, polysorbate 20, polysorbate 40, polysorbate 60, polysorbate 65, polysorbate 80, polymers that are fatty acid-based with a non-ionic group per molecule, acrylate-copolymers, acrylate/styrene copolymers, fatty acid derivatives, polyalkoxylates;

- polyurethane (PUR) polymers and/or polyacrylate polymers, preferably linear or branched polyurethane (PUR) polymers and/or polyacrylate polymers, more preferred the polyurethane (PUR) polymer and/or polyacrylate polymer having a MW of 5000 to 30000 g/mol and their copolymers. The polyacrylate polymers may be preferably selected from the Efka® 4000 series from BASF SE.

Further preferred dispersing agents are low molecular weight (< 300 g/mol) cyclic esters and amides (lactones, lactams), which are converted into water-soluble hydroxycarboxylates or aminocarboxylates such as ε-caprolactone or ε-caprolactam on saponification.

Exemplary dispersing agents are alkoxylated, preferably ethoxylated or ethoxylated and propoxylated, fatty acid alkyl esters preferably containing 1 to 4 carbon atoms in the alkyl chain, more particularly the fatty acid methyl esters. The alkoxylated alcohol dispersing agents mentioned above includes end caped alkoxylated alcohol dispersing agents.

Exemplary nonionic low alkoxylated alcohol dispersing agents that can be used are alkoxylated alcohols containing 1 to 4 ethylene oxide groups (1-4EO), 1 to 4 butylene oxide groups (1-4BO), 1 to 4 propylene oxide groups (1-4PO), end caped alkoxylated alcohol dispersing agents thereof or mixtures thereof.

Advantageously low alkoxylated alcohols are useful according to the invention, particularly primary and/or branched alcohols, preferably containing 8 to 18 carbon atoms, and containing 1 to 4 ethylene oxide groups (1-4EO), 1 to 4 butylene oxide groups (1-4BO), 1 to 4 propylene oxide groups (1-4PO), end caped alkoxylated alcohol dispersing agents.

Exemplary nonionic higher alkoxylated alcohol dispersing agents suitable for use in the color masterbatch are alkoxylated alcohols containing 5 to 40 ethylene oxide groups (5-40EO), butylene oxide groups (5-40BO), propylene oxide groups (5-40PO), preferably 6 to 30 ethylene oxide groups (6-30EO), butylene oxide groups (6-30BO), propylene oxide groups (6-30PO), further preferred 7 to 20 ethylene oxide groups (7-20EO), butylene oxide groups (7-20BO), propylene oxide groups (7-20PO), more preferred 8 to 10 ethylene oxide groups (8-10EO), butylene oxide groups (8-10BO), propylene oxide groups (8-10PO), and most preferred 8 ethylene oxide groups (8EO), butylene oxide groups (8BO), propylene oxide groups (8PO) groups, end caped alkoxylated alcohol dispersing agents thereof, or mixtures thereof.

Advantageously higher alkoxylated alcohols useful in the coloring bath are particularly linear and/or branched alcohols, preferably containing 8 to 18 carbon atoms, and 5 to 40 ethylene oxide groups (5-40EO), butylene oxide groups (5-40BO), propylene oxide groups (5-40PO), preferably 6 to 30 ethylene oxide groups (6-30EO), butylene oxide groups (6-30BO), propylene oxide groups (6-30PO), further preferred 7 to 20 ethylene oxide groups (7-20EO), butylene oxide groups (7-20BO), propylene oxide groups (7-20PO), more preferred 8 to 10 ethylene oxide groups (8-10EO), butylene oxide groups (8-10BO), propylene oxide groups (8-10PO), and most preferred 8 ethylene oxide groups (8EO), butylene oxide groups (8BO), propylene oxide groups (8PO), end caped alkoxylated alcohol dispersing agents thereof, or may contain a mixture. The alcohol radical may be linear, branched, or may contain a mixture.

Particularly preferred are higher alkoxylated alcohols, preferably alcohol ethoxylates with linear or branched radicals of alcohols with 12 to 18 carbon atoms, e.g. from coco-, palm-, tallow- or oleyl alcohol, containing 8 to 18 carbon atoms, and 5 to 40 ethylene oxide groups (5-40EO), butylene oxide groups (5-40BO), propylene oxide groups (5-40PO), preferably 6 to 30 ethylene oxide groups (6-30EO), butylene oxide groups (6-30BO), propylene oxide groups (6-30PO), further preferred 7 to 20 ethylene oxide groups (7-20EO), butylene oxide groups (7-20BO), propylene oxide groups (7-20PO), more preferred 8 to 10 ethylene oxide groups (8-10EO), butylene oxide groups (8-10BO), propylene oxide groups (8-10PO), and most preferred 8 ethylene oxide groups (8EO), butylene oxide groups (8BO), propylene oxide groups (8PO), end caped alkoxylated alcohol dispersing agents thereof, or may contain a mixture. However, most

preferred is isotridecyl alcohol with 6EO to 14EO, 6PO to 14PO, 6BO to 14BO, preferably 7EO to 10EO, 7PO to 10PO, 7BO to 10BO, and most preferred 8EO, 8PO, 8BO, or a mixture thereof.

According to the present invention higher alkoxylated alcohols can be used with 5EO, 6EO, 7EO, 8EO, 9EO, 10EO, 11EO, 12EO, 13EO, 14EO, 15EO, 16EO,17EO, 18EO, 19EO, 20EO, 21EO, 22EO, 23EO, 24EO or 25EO, 5PO, 6PO, 7PO, 8PO, 9PO, 10PO, 11PO, 12PO, 13PO, 14PO, 15PO, 16PO,17PO, 18PO, 19PO, 20PO, 21PO, 22PO, 23PO, 24PO or 25PO, 5BO, 6BO, 7BO, 8BO, 9BO, 10BO, 11BO, 12BO, 13BO, 14BO, 15BO, 16BO,17BO, 18BO, 19BO, 20BO, 21BO, 22BO, 23BO, 24BO or 25BO, end caped alkoxylated alcohol dispersing agents thereof, or a mixture thereof.

Exemplary higher alkoxylated alcohols with 5EO to 40EO, preferably 6EO or 30EO, further preferred 7EO to 20EO, more preferred 8EO to 10EO and most preferred 8EO; 5PO to 40PO, preferably 6PO or 30PO, further preferred 7PO to 20PO, more preferred 8PO to 10PO and most preferred 8PO; 5BO to 40BO, preferably 6BO or 30BO, further preferred 7BO to 20BO, more preferred 8BO to 10BO and most preferred 8BO include $C_{12}$-$C_{14}$-alcohols; $C_9$-$C_{11}$-alcohols, $C_{13}$-$C_{15}$- alcohols, $C_{12}$-$C_{18}$-alcohols, end caped alkoxylated alcohol dispersing agents thereof, and mixtures thereof, as well as mixtures of $C_{12}$-$C_{14}$-alcohols and $C_{12}$-$C_{18}$ -alcohols, end caped alkoxylated alcohol dispersing agents thereof, and most preferred is a $C_{13}$-alcohol.

In addition to these dispersing agents, fatty alcohols containing more than 12 EO, 12 PO, 12 BO may also be used. Examples of such fatty alcohols are tallow fatty alcohol containing 14 EO, 25 EO, 30 EO or 40 EO, 14 PO, 25 PO, 30 PO or 40 PO, 14 BO, 25 BO, 30 BO or 40 BO and end caped alkoxylated alcohol dispersing agents thereof.

The degrees of 5EO to 40EO, 5PO to 40PO, 5BO to 40BO preferably 6EO or 30EO, 6PO or 30PO, 6BO or 30BO, further preferred 7EO to 20EO, 7PO to 20PO, 7BO to 20BO, more preferred 8EO to 10 EO, 8PO to 10 PO, 8BO to 10 BO and most preferred 8EO, 8PO, 8BO alkoxylation mentioned are statistical mean values, which for a special product, may be either a whole number or a fractional number. However, more preferred, the degrees of 5EO to 40EO, 5PO to 40PO, 5BO to 40BO preferably 6EO or 30EO, 6PO or 30PO, 6BO or 30BO further preferred 7EO to 20EO, 7PO to 20PO , 7BO to 20BO, more preferred 8EO to 10 EO, 8PO to 10 PO, 8BO to 10 BO and most preferred 8EO, 8PO, 8BO alkoxylation mentioned may be either a whole number or a fractional number. Most preferred, the degrees of 5EO to 40EO, 5PO to 40PO, 5BO to 40BO, preferably 6EO or 30EO, 6PO or 30PO, 6BO or 30BO, further preferred 7EO to 20EO, 7PO to 20PO, 7BO to 20BO, more preferred 8EO to 10 EO, 8PO to 10PO, 8BO to 10BO and most preferred 8EO, 8PO, 8BO. The alkoxylation grade mentioned may be a whole number.

Preferred higher alkoxylated alcohols have a narrow homolog distribution (narrow range ethoxylates, NRE).

Further dispersing agents include alkoxylated long chain fatty acid amides where the fatty acid has 8-20 carbon atoms and the amide group is alkoxylated with 1-20 ethylene oxide, propylene oxide and/or butylene oxide units.

A further class of dispersing agents, which can be used in the color masterbatch, is that of the alkyl polyglycosides (APG). Suitable alkyl polyglycosides satisfy the general Formula RO(G)z where R is a linear or branched, particularly 2-methyl-branched, saturated or unsaturated aliphatic radical containing 8 to 22 and preferably 12 to 18 carbon atoms and G stands for a glycose unit containing 5 or 6 carbon atoms, preferably glucose. The degree of oligomerization z is a number between 1.0 and 4.0 and preferably between 1.1 and 1.4.

Silicone containing nonionic dispersing agents, such as the ABIL B8852 or Silwet 7602, can also be used. An exemplary silicone-containing dispersing agent is silicone polybutane.

Examples of amine oxide dispersing agents include: dimethyldodecylamine oxide, dimethyltetradecylamine oxide; ethylmethyltetradecylamine oxide, cetyldimethylamine oxide, dimethylstearylamine oxide, cetylethylpropylamine oxide, diethyldodecylamine oxide, diethyltetradecylamine oxide, dipropyldodecylamine oxide, lauryl dimethyl amine oxide, bis- (2-hydroxyethyl) dodecylamine oxide, bis- (2-hydroxyethyl)-3-dodecoxy-1- hydroxypropyl amine oxide, (2-hydroxypropyl) methyltetradecylamine oxide, dimethyloleyamine oxide, dimethyl- (2-hydroxydodecyl) amine oxide, and the corresponding decyl, hexadecyl and octadecyl homologs of the above compounds.

Additional nitrogen-containing dispersing agents include ethoxylated primary alkyl amines where the alkyl group has 10-20 carbon atoms and the amine is ethoxylated with 2-20 ethylene oxide units.

Additionally, non-ionic dispersing agents derived from the condensation of ethylene oxide with the product resulting from the reaction of propylene oxide and ethylene diamine are also useful in the coloring bath. For example, there are compounds containing from 40% to 80% of polyoxyethylene by weight and having a molecular weight from 5,000 to 11,000 resulting from the reaction of ethylene oxide groups with a hydrophobic base constituted of the reaction product from ethylene diamine and excess propylene oxide wherein the base has a molecular weight on order of 2,500-3,000.

Suitable nonionic dispersing agents include the polyoxyethylene-polyoxypropylene condensates, which are sold by BASF under the trade name ’Pluronic’, polyoxyethylene condensates of aliphatic alcohols/ethylene oxide condensates having from 1 to 30 moles of ethylene oxide per mole of coconut alcohol; ethoxylated long chain alcohols sold by Shell Chemical Co. under the trade name ’Neodol’, polyoxyethylene condensates of sorbitan fatty acids, alkanolamides, such as the monoalkoanolamides, dialkanolamides and the ethoxylated alkanolamides, for example coconut monoethanolamide, lauric isopropanolamide and lauric diethanolamide; and amine oxides for example dodecyldimethylamine oxide.

Further exemplary dispersing agents include alkylphenol alkoxylates, and amine oxides such as alkyl dimethylamine oxide or bis (2- hydroxyethyl) alkylamine oxide.

Typical ionic dispersing agents are anionic dispersing agents, including ammonium salts or alkali salts of carboxylic, sulfamic or phosphoric acids, for example, sodium lauryl sulfate, ammonium lauryl sulfate, lignosulfonic acid salts, ethylene diamine tetra acetic acid (EDTA) sodium salts and acid salts of amines such as laurylamine hydrochloride or poly(oxy-1,2 ethanediylphenyl)alpha-sulfo-omega-hydroxy ether with phenol 1-(methylphenyl)ethyl derivative ammonium salts; or amphoteric, that is, compounds bearing both anionic and cationic groups, for example, lauryl sulfobetaine; dihydroxy ethylalkyl betaine; amido betaine based on coconut acids; disodium N-lauryl amino propionate; or the sodium salts of dicarboxylic acid coconut derivatives.

Further exemplary ionic dispersing agents include fatty alcohol ether sulphates, olefin sulphonates, fatty acid derivatives, phosphoric acid esters or lignin sulphonates.

Exemplary anionic dispersing agents include organic carboxylates, organic sulfonates, organic sulfates, organic phosphates and the like, particularly linear alkylaryl sulfonates, such as alkylarylcarboxylates, alkylarylsulfonates, alkylarylphosphates, and the like. These classes of anionic dispersing agents are known within as linear alkyl benzyl sulfonates (LABS), alpha olefin sulfonates (AOS), alkyl sulfates, and secondary alkane sulfonates.

Suitable cationic dispersing agents include quaternary ammonium compounds having the formula of RR'R" R'"$N^+X^-$, where R, R', R" and R'" are each a $C_1$-$C_{24}$ alkyl, aryl or arylalkyl group that can optionally contain one or more P, O, S or N heteroatoms, and X is F, Cl, Br, I or an alkyl sulfate. Additional preferred cationic dispersing agents include ethoxylated and/or propoxylated alkyl amines, diamines, or triamines.

## Producing the colored plastic article

As already mentioned, it is an object of the present invention to provide a method for producing the colored plastic article comprising the steps:

a) Mixing the above color masterbatch with a plastic basis material in an extruder in a weight ratio of 20:80 to 1:99, preferably of 10:90 to 2:98, more preferably of 5:95 to 3:97 (color masterbatch: plastic basis material), wherein the plastic basis material comprises at least one basis polymer having a molecular weight Mw ≥ 1000 g/mol, or
b) Providing the mixture comprising the color masterbatch and the plastic basis material in an extruder, and
c) forming the colored plastic article by a polymer processing technique.

In other words, the colored plastic article is preferably provided by mixing and melting the color masterbatch with the plastic basis material. Preferably the color masterbatch is solid at 23 °C. This simplifies processing of the color masterbatch. Since the color masterbatch and the plastic basis material are mixed in an extruder and the colored plastic article is formed by a polymer processing technique, a colored plastic article that is colored throughout its entire volume is produced. However, it is possible that the plastic article consists of several individual layer and only one or some of these individual layers are colored. For example, if the color masterbatch is only added to an outer layer, only this layer is colored. The remaining layers retain the original color of the plastic basis material.

The color masterbatch and the plastic basis material are mixed in a weight ratio of 20:80 to 1:99, preferably of 10: 90 to 2:98, more preferably of 5:95 to 3:97 (color masterbatch : plastic basis material), in order to ensure a satisfying color strength of the colored plastic article as well as the decolorabilitiy of the colored plastic article in the decoloring bath.

With regard to the polymer processing technique a variety of different processing techniques may be used. According to a preferred embodiment of the invention the polymer processing technique is selected from thermoplastic processing techniques, such as injection molding, compression molding, calendaring, extrusion, film extrusion processing method, blown cast processing method, calandered films processing method, thermoforming sheets processing method, foam extrusion processing method, profile extrusion processing method, injection blow molding processing method, injection stretch blow molding processing method, compression molding processing method, extruding processing method, thermoforming processing method, blowing processing method and/or 3D-printing processing method.

## Plastic basis material and basis polymer

The plastic basis material is the main component of the plastic article and its properties influence the usability of the colored plastic article. The plastic basis material comprises at least one basis polymer having a molecular weight Mw ≥ 1000 g/mol, preferably Mw ≥ 1200 g/mol, more preferably Mw ≥ 1500 g/mol. In general, the basis polymer may be any polymer or any mixture of polymers and may be selected according to the use of the plastic article.

According to a preferred embodiment of the invention the plastic basis material is selected from the group comprising thermoplastic and thermoplastic elastomer and/or the plastic basis material is not a thermosetting polymer; and/or the basis polymer is selected from the group comprising thermoplastic and thermoplastic elastomer and/or the

basis polymer is not a thermosetting polymer.

In general, the plastic basis polymer may be any polymer or any mixture of polymers and may be selected according to the use of the plastic article. Preferably, the plastic basis polymer is chosen to be compatible with the carrier of the color masterbatch. The basis polymer can be selected different to the at least one carrier of the color masterbatch. Alternatively, the basis polymer can be the same polymer as the at least one carrier of the color masterbatch. Preferably the basis polymer is selected from the list comprising the carriers.

Mw of polymer

As already mentioned, the carrier is an organic polymer having a molecular weight Mw ≥ 1000 g/mol, preferably Mw ≥ 1200 g/mol, more preferably Mw ≥ 1500 g/mol. Also, the water-soluble and/or water-swellable component can be a water-soluble polymer and/or a water-swellable polymer having a molecular weight Mw ≥ 1000 g/mol, preferably Mw ≥ 1200 g/mol, more preferably Mw ≥ 1500 g/mol. Furthermore, the basis polymer has molecular weight Mw ≥ 1000 g/mol, preferably Mw ≥ 1200 g/mol, more preferably Mw ≥ 1500 g/mol.

For polymers the individual polymer chains rarely have exactly the same degree of polymerization and molar mass, and there is a distribution around an average value (molecular weight distribution (MWD)). To this regard, the molecular weight of the polymer is given with respect to the Mass average molar mass or Mw (also commonly referred to as weight average or Weight Average Molecular Weight (WAMW)).

The mass average molecular mass can be determined by gel permeation chromatography, static light scattering, small angle neutron scattering, X-ray scattering, and/or sedimentation velocity. Furthermore, in case the distribution is known, the mass average molecular mass can be calculated by

$$\bar{M}_w = \frac{\sum_i N_i M_i^2}{\sum_i N_i M_i}$$

where $N_i$ is the number of molecules of molecular mass $M_i$.

## Plastic article and color stability of plastic article

Not only different polymer processing technique can be used in order to provide the colored plastic article, but also different types of colored plastic articles may be produced.

According to preferred embodiments of the invention, the colored plastic article is selected from the group comprising a sheet, a foil, a container, a part, a tube, a profile, a nonwoven fabric, and preferably the article is selected from the group comprising rigid packaging such as bottles, jars, caps and closures, color coded packaging and containers of all types, including ones for industrial components, computer face-plates, keyboards, bezels and cellular phones, residential and commercial lighting fixtures and components therefor, such as sheets, used in building and in construction, tableware, including plates, cups and eating utensils, small appliances and their components, optical and sun-wear lenses, as well as decorative films including such films that are intended for use in film insert molding.

As already mentioned, due to the use of alkali clearable dyes as coloring agent the colored plastic article has an enhanced color stability. Alkali clearable dyes are stable in a broad pH range and generally have higher light and heat resistance than the dyes from which they are derived.

In this regard and according to a preferred embodiment of the invention, the plastic article is color stable under any or any combination of the following conditions:

exposure to water for 10 h at 60 °C;
exposure to ethanol 95 % for 2 h at 40 °C;
exposure to a 0,1% alkaline solution of $NaHCO_3$ for 2 h at 60 °C
exposure to a 3% acid solution of acetic acid for 2 h at 60 °C;
exposure to a solution of 20 % ethanol and 3 % acetic acid in water for 2 h at 50°C;
exposure to a solution of 20 % ethanol and 3 % acetic acid in water for 24 h at 40 °C;
fastness to washing according to DIN EN ISO 105-C06 C2S;
fastness to perspiration according to DIN EN ISO 105-E04.

To this regard and according to another preferred embodiment the colored plastic article is color stable under the food safety requirements defined by any or any combination of the following norms: DIN 16524-2, CEI 05-59; DIN 16524-1 to DIN 16524-3, JN 16-80; DIN 10955; DIN 16524-3, CEI 11-60; DIN 16524-3, CEI 08-60; CEI 20-80; JN 17-80;

DIN 16525, CEI 19-79; DIN 16524-1; DIN 53415; DIN 16524-3, CEI 10-60; DIN 53375; CEI 18-77; DIN 16524-2, CEI 06-59; DIN 16524-3, CEI 09-60; DIN 53415; DIN 16524-2, CEI 07-59; and DIN 16524-1, CEI 03-59.

In the context of this invention being color stable preferably means, that the remaining color strength after being exposed to one of the above conditions and/or norms is ≥ 75%, preferable ≥ 85%, more preferably ≥ 95%. The remaining color strength is the color strength K/S of the plastic article before migration test minus the loss of color strength K/S during the migration test in % with color strength K/S according to Kubelca-Munk. Color strength according to Kubelca-Munk can be determined by the spectrophotometer Konica-Minolta 3600A at maximum absorbance. In addition, or alternatively to detecting the color change of the plastic article, the color stability of the plastic article can be determined by detecting the color change of the extraction medium of the extraction test and/or the color change of a polar decoloring agent as dye absorbing agent that is added to the extraction medium prior to the test. In this regard the color change of the extraction medium and/or the polar decoloring agent is determined by visual inspection based on DIN ISO 105 A03 and A02. Preferably with regard to this assessment, the plastic article is considered color stable when 2 or less points are assigned in the visual inspection (see table 8). The polar decoloring agent as dye absorbing agent preferably is a poly amide (PA6, melting point 220°C, viscosity number (acc. to ISO307; 96% sulfuric acid) 187 -203 g/cm$^3$; spherical granulate with diameter 2.0 - 2.5mm).

## Decoloring the plastic article

As already mentioned, it is also an object of the invention to provide a method for decoloring the colored plastic article, comprising the steps of

a) shredding the colored plastic article to a granulate and/or a powder,
b) exposing the granulate and/or powder to a decoloring bath for about ≥ 1 minute to about ≤ 240 minutes, preferably about ≥ 5 minute to about ≤ 180 minutes, more preferably about ≥ 10 minute to about ≤ 60 minutes, wherein the decoloring bath has a temperature above a glass transition temperature $T_g$ of the colored plastic article and below a melting temperature $T_m$ of the colored plastic article and/or has a temperature ≥ 80 °C to ≤ 130 °C,
wherein the decoloring bath comprises
water, and
at least one polar solvent,
wherein the decoloring bath has a pH about ≥ 10, preferably about ≥ 11, more preferably about ≥ 12, and wherein the pH of the decoloring bath is adjusted by adding a base, preferably NaOH.

The glass transition temperature $T_g$ of the plastic basis material may be determined according to the following standards: DIN 51007 (Thermal Analysis - Differential Thermal Analysis and Differential Scanning Calorimetry - General Principles), ASTM E 474, ASTM D 3418, DIN EN ISO 11357-1 (Plastics - Differential Scanning Thermal Analysis Part 1: General principles. (2008)), ISO 11357-2 (Plastics - Differential Scanning Calorimetry Part 2: Determination of the glass transition temperature. (1999)), ISO / DIS 11357-3 (Plastics - Differential Scanning Calorimetry Part 3: Determination of the melting and crystallization temperature and the melting and crystallization enthalpy. (2009)), ISO 11357-4(Plastics - Differential Scanning Thermal Analysis (DSC) Part 4: Determination of specific heat capacity. (2005)).

The glass transition temperature $T_g$ of the plastic basis material may be determined using a Mettler Toledo DSC 3+ differential calorimeter, a sample amount of 10 +/- 1 mg, nitrogen as purge gas, and the following settings: 1. Heating: -40 °C to 280 °C with 20 °C/min, Hold: 3 minutes at 200 °C, Cooling: 280 °C to -40 °C at 10 °C/min, Hold: 5 minutes at -20 °C, 2. Heating: -40 °C to 300 °C at 20 °C/min.

The melting temperature $T_m$ of the plastic basis material may be determined according to the same standards and procedures as used for determining the glass transition temperature $T_g$ of the plastic basis material.

In other words, the colored plastic article is decolorizabel under the above decoloring conditions. Being decolorizable preferably means that the process allows to reuse at least 85 % of the plastic basis material after decolorization.

The recycling process is based on two characteristics of the colored plastic article. Due to the water-soluble and/or water-swellable component in the plastic article, the article swells and/or disintegrates in the decoloring bath. This gives the decoloring bath access to the alkali clearable dye. Due to basic conditions of the decoloring bath, the alkali clearable dye is hydrolyzed to its soluble components.

For recycling of the plastic article, the colored plastic article is shredded into granulate and/or a powder which subsequently is exposed to the decoloring bath.

According to a preferred embodiment of the invention the colored plastic article is shredded to a granulate and/or powder having a mean particle size of 0.1 mm to 20 mm, preferably 0.1 mm to 2 mm, more preferably 0.2 mm to 1 mm. A low particle size enables for a fast decoloring in the decoloring bath.

According to another preferred embodiment of the invention the weight ratio of the granulate and/or powder to the decoloring bath is 1:2 to 1:50, preferably 1:10 to 1:40, more preferably 1:20 to 1:30 (granulate and/or powder :

decoloring bath). This enables a fast decoloration without excess waste.

Oxidizing agent, reducing agents and/or polar decoloring agent

The process of decolorization can be further improved by using an oxidizing agent or a reducing agent and/or a polar decoloring agent in the decoloring bath. These agents shift the equilibrium of the decoloring reaction towards the decolored plastic article by attacking the hydrolyzed dye, which is soluble in the decoloring bath or by adsorption and/or absorption of the hydrolyzed dye from the decoloring bath. Thus, according to a preferred embodiment of the invention the decoloring bath further comprises an oxidizing agent or a reducing agent and/or a polar decoloring agent. Depending on the composition of the decoloring bath, the decoloring is further facilitated by the oxidizing agent or by the reducing agent, which attacks the hydrolyzed dye. Alternatively to the oxidizing or reducing agent, or in addition to the oxidizing or reducing agent, the polar decoloring agent for adsorption and/or absorption of the hydrolyzed dye can be use. Since the dye and thus also the hydrolyzed dye is a low molecular weight dye, and its hydrolyzed form is soluble in the decoloring bath, the hydrolyzed dye can migrate into the polar decoloring agent and thus facilitate decoloration of the plastic article.

Oxidizing and reducing agents for the destruction of the dye

According to an embodiment, the hydrolyzed form of the alkali clearable dye that is soluble in the decoloring bath can be destroyed by a chemical oxidation or reduction reaction. This shifts the equilibrium in the decolorization process and enhances decoloration.

Preferred oxidizing agents are selected from the group comprising peroxide, peroxyacetic acid, hydrogen peroxide, peroxodisulfate, ozone, sodium percarbonate, sodium perborate, m-Nitrobenzenesulfonate, $H_2SO_4$, $HNO_3$, oxygen-containing anions (oxo anions) of transition metals in high oxidation states such as permanganate $MnO_4^-$, $KMnO_4$, phosphate, oxygen difluoride fluorine, cryptone difluoride, dichromate $Cr_2O_7^{2-}$, metal ions such as $Ce_4^+$, noble metal ions such as those of silver and copper, anions of halo-oxygen acids such bromat $BrO_3^-$, halogens, such as fluorine, chlorine, bromine and iodine, hypochlorite, sodium hypochlorite, and/or potassium hypochlorite; hypochlorous acid. The oxidizing agents may be used together with bleach activators such as Tetraacetylethylenediamine.

Preferred reduction agents are selected from the groups comprising

- hydrogen in combination with precious metal catalyst, preferably $H_2$/Ni, $H_2$/Pd, $H_2$/Pt, hydrides;
- complex hydrides, preferably sodium hydride NaH, lithium aluminum hydride LiAlH4, borohydride salts $NaBH_4$;
- base metals, preferably Li, Na, Mg, Zn; low-valent nitrogen;
- phosphorus and sulphur compounds, preferably amidine sulfonic acid, formamidine sulphinic acid, hydrogen sulfide, sodium sulfide, $S^{2-}$, $Na_2S$, sulfites, $SO_2^{-3}$, sodium sulfite, sulfurous acid, sulfur dioxide, thiosulphate, sodium dithionite, sodium bisulfite, $NaHSO_3$, formamidine sulfonic acid, zinc hydroxymethanesulfinate, sodium hydroxymethanesulfinate also known as rongalite, thiourea dioxide also known as thiox, sulfonic acid and its derivatives, sodium carbonate, sodium bicarbonate, sodium oxide, calcium oxide;
- sulfinic acid and sulfinic acid derivates, preferably aminoimino methansulfinic acid;
- glucose mixtures with dispersants; and
- formamidine sulphinic acid and zinc hydroxymethanesulfinate.

Polar decoloring agent

The decolorization of the plastic article can be improved by using the polar decoloring agent in the decoloring bath. The polar decoloring agent adsorbs and/or absorbs the hydrolyzed form of the alkali clearable dye that is present in the decoloring bath.

With respect to the polar decoloring agent, it may be advantageous to select the polar decoloring agent from the group comprising:

- at least one polar-polymer having a Mw of about ≥ 1000 g/mol, and/or
- at least one polar compound having a Mw of about < 1000 g/mol,
  wherein the polar decoloring agent before used in the decolorization process is preferably free of a dye.

In the context of this invention the polar-polymer is an organic polymer that comprise at least ≥ 5 wt.-% of heteroatoms, wherein the weight % is calculated based on the weights of the polar-polymer. In this context a heteroatom may be any atom excluding C-atoms and H-atoms. Preferably, the heteroatom may be selected from the group comprising: N, O, F, Cl, Br, I, S, and P. Furthermore, preferably the polar-polymer having a Mw ≥ 1000 g/mol, may each comprise

at least ≥ 5 wt.-% and preferably < 70 wt.-% of O-atoms.

In the context of this invention the polar compound is an organic compound that comprise at least ≥ 5 wt.-% of heteroatoms, wherein the weight % is calculated based on the weights of the organic compound. In this context a heteroatom may be any atom excluding C-atoms and H-atoms. Preferably, the heteroatom may be selected from the group comprising: N, O, F, Cl, Br, I, S, and P. Furthermore, preferably the polar compound having a Mw < 1000 g/mol, may each comprise at least ≥ 5 wt.-% and preferably < 70 wt.-% of O-atoms.

The molecular weight of the polar decoloring agent for the adsorption and/or absorption of the dye from the decoloring bath may be lower than the molecular weight of the basis polymer of the plastic basis material. Furthermore, preferably the polar decoloring agent is more polar than the basis polymer of the plastic basis material. This means in the context of this invention, that the percentage by weight of heteroatoms is higher in the polar decoloring agent than in the basis polymer of the plastic basis material.

In case the polar decoloring agent is solid, the particle size of the polar decoloring agent is preferably different than the particle size of the granulate and/or powder generated from the colored plastic article. Preferably the particles size of the granulate and/or powder of the colored plastic article differs from the particle size of the solid polar decoloring agent such that a separation of the granulate generated from the colored plastic article from the solid decoloring agent is possible using a sieve.

The adsorption and/or absorption of the hydrolyzed form of the alkali clearable dye to the polar decoloring agent may be enforced by increasing the amount of electrostatic interaction between dye and the polar decoloring agent. According to a preferred embodiment the polar decoloring agent may comprise polar, acidic, and/or basic groups, wherein polar groups for electrostatic interaction are preferred. More preferred the polar decoloring agent may comprise polar groups selected from the group comprising sulfonyl group, such as tosyl-, brosyl-, nosyl-, mesyl-, trifyl-, tresyl-, and dansyl-, hydroxyl group, amine groups including primary-, secondary-, and tertiary amines, carboxylic groups, imine and enamine groups, ketone groups, carbonyl groups, aldehyde groups, organic amide groups such as sulfone amides and phosphor amides, organic halide groups, and/or carbamate groups.

Preferably the polar decoloring agent is solid at the temperature of the decolorizing process. According to a preferred embodiment the polar decoloring agent may have the form of flakes, particles, granulates. Preferably the particles, granulates, flakes of the polar decoloring agent may have a mean particle size diameter of 0.01 mm to 100 mm, further preferred 1 mm to 8 mm and also preferred 2 mm to 5 mm. Further preferred the polar decoloring agents are nano-particles, preferably with a mean particle size of about ≥ 1 nm to about ≤ 100 nm. With regard to the form the particles, granulates, flakes of the polar decoloring agent may preferably not have a round shape (worst ratio surface to volume). However, in case nano-particles are used, round shapes may be possible. The design of the polar decoloring agent may have cylindrical form or any other design. Furthermore, it is preferred that the particles, granulates, flakes and/or nano-particles are arranged on or in a surface of a solid substrate. It seems to be important that the shape should be selected such that the ratio surface:volume may be as large as possible.

Having a solid polar decoloring agent in the form of flakes, particles and/or granulates has the advantage that it is possible to filter off the polar decoloring agent. Furthermore, the size of the solid polar decoloring agent is different from the size of the granulates of the colored plastic article to be decolored, such that a separation of the polar decoloring agent from the granulates of the colored plastic article by sieve is possible

However, separation of the polar decoloring agent may also be possible by arranging the polar decoloring agent on or in the surface of a solid substrate. In order to exploit a high surface to volume ratio, it may be preferred to have the polar decoloring agent as nano-particles arranged on the surface of a solid substrate.

In the context of separating the polar decoloring agent from the liquid components of the decoloring bath i.e. from the water, polar solvent and optionally the nonpolar solvent, and for separating the polar decoloring agent from the granulates and/or powder of the colored plastic article and according to a preferred embodiment the polar decoloring agent may get a density below the density of the liquid components of the decoloring bath, due to the absorption and/or adsorption of the dye, having a molecular weight Mw in the range of about ≥ 250 g/mol to about ≤ 800 g/mol. Thus, the colored polar decoloring agent may be separated from the liquid components of the decoloring bath. It may be possible that the density of the polar decoloring agent changes by absorbing and/or adsorbing of the dye. The density of the polar decoloring agent may increase above the density of at least one of the liquid components of the decoloring bath. Therefore, due to absorption and/or adsorption of the dye the polar decoloring agent may sink onto the bottom of a reaction vessel and may be easily separated from the liquid components of the decoloring bath, while the granulates generated from the colored plastic article stay in the decoloring bath.

As already mentioned, the polar decoloring agent is preferably select from the group comprising:

- at least one polar-polymer having a Mw of about ≥ 1000 g/mol, and/or
- at least one polar compound having a Mw of about < 1000 g/mol.

Polar-polymer or mixture

The polar-polymer or mixture thereof may be selected from the group comprising:

- polyacrylate with methyl (polymethylacrylate), ethyl (polyethylacrylate), propyl (polypropylacrylate), or butyl (polybutylacrylate),
- polymethacrylate with methyl (polymethylmathacrylate), ethyl (polyethylmethacrylate), propyl (polypropylmethacrylate), or butyl (polybutylmethacrylate),
- copolymers of acrylic and methacrylic esters including, among others, *tert*-Butyl (meth)acrylate, pentyl(meth)acrylate and 2-ethylhexyl(meth)acrylate; (Meth)acrylates derived from unsaturated alcohols, preferably oleyl(meth)acrylate, 2-propynyl(meth)acrylate, allyl(meth)acrylate, vinyl(meth)acrylate;
- aryl(meth)acrylates polymers, preferably benzyl(meth)acrylate polymers or phenyl(meth)acrylate polymers, the aryl radicals each being unsubstituted or up to four times substituted;
- cycloalkyl(meth)acrylates polymers, preferably 3-vinylcyclohexyl(meth)acrylate polymers, bornyl (meth)acrylate polymers;
- hydroxylalkyl (meth)acrylates polymers, preferably 3- hydroxypropyl (meth)acrylate polymers, 3,4- dihydroxybutyl(meth)acrylate polymers, 2-hydroxyethyl(meth)acrylate polymers, 2-hydroxypropyl(meth)acrylate polymers;
- glycol di(meth)acrylates polymers, preferably 1,4-butanediol (meth)acrylate polymers;
- (meth)acrylates of ether alcohols polymers, preferably tetrahydrofurfuryl (meth)acrylate polymers, vinyloxyethoxyethyl(meth)acrylate polymers;
- polymers of amides and nitriles of the (meth)acrylic acid, preferably N-(3-dimethylaminopropyl)(meth)acrylamide polymers, N-(diethylphosphono)(meth)acrylamide polymers, 1-methacryloylamido-2-methyl-2-propanol polymers;
- polymers of sulfur-containing methacrylates, preferably ethylsulfinylethyl(meth)acrylate, 4-thiocyanatobutyl(meth)acrylate polymers, ethylsulfonylethyl(meth)acrylate polymers, thiocyanatomethyl(meth)acrylate polymers, methylsulfinylmethyl(meth)acrylate polymers, bis((meth)acryloyloxyethyl)sulfide polymers;
- polyhydric (meth)acrylates, preferably trimethyloylpropanetri(meth)acrylate polymers;
- acrylonitrile polymers;
- vinyl ester polymers, preferably vinyl acetate polymers;
- styrene polymers, substituted styrenes polymers with an alkyl substituent in the side chain, preferably $\alpha$-methylstyrene and $\alpha$-ethylstyrene, substituted styrenes polymers with an alkyl substituent on the ring, preferably vinyl toluene, and *p*-methylstyrene, halogenated styrene polymers, preferably monochlorostyrene polymers, dichlorostyrene polymers, tribromostyrene polymers and tetrabromostyrene polymers;
- heterocyclic vinyl polymers, preferably 2-vinylpyridine polymers, 3-vinylpyridine polymers, 2-methyl-5-vinylpyridine polymers, 3-ethyl-4-vinylpyridine polymers, 2,3-dimethyl-5-vinylpyridine polymers, vinylpyrimidine polymers, vinylpiperidine polymers, 9-vinylcarbazole polymers, 3-vinylcarbazole polymers, 4-vinylcarbazole polymers, 1-vinylimidazole polymers, 2-methyl-1-vinylimidazole polymers, N-vinylpyrrolidone polymers, 2-vinylpyrrolidone polymers, N-vinylpyrrolidine polymers, 3-vinylpyrrolidine polymers, N-vinylcaprolactam polymers, N-vinylbutyrolactam polymers, vinyl oxolane polymers, vinyl furan polymers, vinyl thiophene polymers, vinylthiolane polymers, vinylthiazoles and hydrogenated vinylthiazoles polymers, vinyloxazoles and hydrogenated vinyloxazoles;
- polymers of vinyl and isoprenyl ethers;
- maleic acid polymers, preferably maleic anhydride polymers, methyl maleic anhydride polymers, maleimide polymers, methyl maleimide;
- copolymers of ethylene and propylene with acrylic esters, preferably polyethylen-block-co-polymethylmethacrylat, polypropylen-block-co-polymethylmethacrylat;
- aliphatic and/or aromatic polyesters, preferabl, hydroxyl-functional dendritic polyesters, polycaprolactone, polyethylenterephthalate (PET), polytrimethylenterephthalat (PTT), polybutylenterephthalat (PBT), glycolized polyglycolterephthaltat (G-PET), amorphous polyethylenterephthalat (A-PET), polyesters of terephthalic acid, polyspiro-diolterephthalate, polypentaspiroglycol-terephthalate (PSG), polycyclohexylenedimethylene-terephthalate (PCT), polyester based copolymer including a dicarboxylic acid-derived residue including a residue derived from an aromatic dicarboxylic acid and a diol-derived residue including a residue derived from 4-(hydroxymethyl)cyclohexylmethyl-4'-(hydroxymethyl)cyclohexane carboxylate, polyester based copolymer including a dicarboxylic acid-derived residue including a residue derived from an aromatic dicarboxylic acid and a diol-derived residue including a residue derived from 4,4-(oxybis(methylene)bis) cyclohexane methanol;
- polycarbonate (PC), 2,2-Bis-(4-hydroxyphenyl)-propan (Bisphenol A) polycarbonate, 2,2-Bis-(4-hydroxyphenyl)-butan (Bisphenol B) polycarbonate, 1,1-Bis(4-hydroxyphenyl)cyclohexan (Bisphenol C) polycarbonate, 2,2'-Methylendiphenol (Bisphenol F) polycarbonate, 2,2-Bis(3,5-dibrom-4-hydroxyphenyl)propan (Tetrabrombisphenol A) polycarbonate und 2,2-Bis(3,5-dimethyl-4-hydroxyphenyl)propan (Tetramethylbisphenol A) polycarbonate, bisphenol S polycarbonate, dihydroxydiphenylsulfid polycarbonate, tetramethylbisphenol A polycarbonate, 1,1-Bis(4-bydroxyphenyl)-3,3,5-trimethylcyclohexane (BPTMC) polycarbonate, 1,1,1-Tris(4-hydroxyphenyl)-ethane (THPE) polycarbonate;

- aliphatic polyamide (PA), preferably PA 6 based on polycaprolactam, PA 6.6 based on 6,6-hexamethylendiamin and adipic acid, PA 6.66 based on caprolactam, co-poymer of hexamethylendiamin and adipic acid, PA 66.610 based on hexamethylendiamin, copolymer of adipic acid and sebaic acid, PA 4.6, PA10, PA 12 and PA copolymers;
- polyurethane (PU),
- polar-copolymere, maleic anhydride-olefin copolymer;
- polyalkylenoxide, polyalkylene block copolymer, propylenoxide-ethylenoxide copolymer, (m)ethylene acrylate-maleic anhydride copolymer;
- polar-terpolymere, preferably reactive terpolymers of ethylene, acrylic ester and maleic anhydride, or ethylene, methacrylic ester and maleic anhydride, or ethylene, acrylic esters and glycidyl methacrylate, or ethylene, methacrylic esters and glycidyl methacrylate, or ethylene, (meth)acrylic esters and methyl (methyl(meth)acrylate), ethyl (ethy(meth)acrylate), propyl (propyl(meth)acrylate), or butyl (butyl(meth)acrylate), polyamide, polyester-polyamides, or butyl (butyl(meth)acrylate), polyether-polyamide copolymers;
- polar polymer blends, preferably polycarbonate/polyethylenterephthalat blends (PC/PET blends), polycarbonate/polybutyleneterephthalate blends (PC/PBT blends), blends of polycyclohexylene dimethylene terephthalate copolymer, blends of poly(butylene-adipate-terephthalate);
- polyacrylnitril and polyacrylnitril-copolymers, preferably poly acrylonitrile butadiene styrene (ABS), poly styrene-acrylonitrile;
- polystyrene and polystyrene copolymers, preferably styrene/butadiene co-polymer (SBR), poly styrene-isoprene-styrene (SIS), poly(glycidyl methacrylate) grafted sulfonamide based polystyrene resin with tertiary amine;
- ethylene-vinyl acetate;
- polyether, preferably polyethyleneglycol, polyethyleneglycol with at least one fatty acid coupled to the polyethyleneglycol, terminating functional groups such $NH_2$-terminated polyethers;
- functionalized polyacrylamide polymers, copolymers and terpolymers, preferably poly(2-acrylamido-2-aminopropionicacid) (polyAMPA), poly(2-acrylamido-2-amino propane sulfonic acid), poly(N-isopropylacylamide (polyPNIPAM); poly (amidoamine-co-acrylic acid) copolymer, poly(N,N-dimethylacrylamide-co-sodium acrylate), poly(acrylamide-co-sodium acrylate)/poly(ethylene glycol) semi-IPN, poly(acrylamide-co-sodium 4-styrenesulfonate), poly(acrylamide-co-sodium 4-styrenesulfonate)/poly(ethylene glycol) semi-IPN, poly(acrylamide-co-sodium methacrylate), poly(acrylamide-co-sodium methacrylate)/poly(ethylene glycol) semi-IPN, and/or poly(N-isopropylacrylamide-co-acrylic acid) andpoly(acrylamide-co-acrylic acid;
- poly(ether sulfones)/poly(ethyleneimine) (PES/PEI);
- polyvinylpyrrolidone, preferably poly(N-vinyl-2-pyrrolidone), poly(N-vinyl-2-pyrrolidone-co-acrylonitrile) treated with hydroxylamine-hydrochloride
- polyvinyl alcohol; and/or
- poly(1-naphthylamine)-camphorsulphonic acid.

Other synthetic and/or non-synthetic polar-polymer of amorphous copolyester that can be used are known under the tradename Akestra 90. The above named synthetic and/or non-synthetic polar-polymers may be used alone or in an admixture of two or more.

With regard to hydroxyl-functional dendritic polyesters that can be suitable used as a polar-polymers, these molecules may be produced using polyalcohol cores, hydroxy acids and technology based on captive materials. The dendritic structures may be formed by polymerization of the particular core and 2,2-dimethylol propionic acid (Bis-MPA). The base products that may be obtained are hydroxyl-functional dendritic polyesters. They may be fully aliphatic and may consist only of tertiary ester bonds. They may provide excellent thermal and chemical resistance. Extensive branching also improves reactivity, lowers viscosity and results in balanced mechanical properties. The hydroxyl-functional dendritic polyesters may be known under the trade name Boltorn®. The following dendritic polymers may be used as non-limiting examples: Boltorn® H20 16 terminal hydroxyl groups, nominal molecular weight of 1750 g/mol, Boltorn® H2004 6 terminal hydroxyl groups, nominal molecular weight of 3100 g/mol, Boltorn® H311 23 terminal hydroxyl groups, nominal molecular weight of 5300 g/mol, Boltorn® P500 Formulated bimodal product with terminal hydroxyl groups, nominal molecular weight 1800 g/mol, Boltorn® P1000 formulated bimodal product with terminal hydroxyl groups, nominal molecular weight 1500 g/mol, Boltorn® U3000 modified with unsaturated fatty acid, nominal molecular weight 6500 g/mol, Boltorn® W3000 modified with non-ionic groups and unsaturated fatty acid, nominal molecular weight 10000 g/mol.

With regard to the polyester based copolymers that can be suitable used as a polar polymers, these may further include but not limited to a dicarboxylic acid-derived residue including a residue derived from an aromatic dicarboxylic acid and a diol-derived residue including a residue derived from 4-(hydroxymethyl)cyclohexylmethyl-4'-(hydroxymethyl)cyclohexane carboxylate represented by the following chemical formula 1 and a residue derived from 4,4-(oxybis(methylene)bis) cyclohexane methanol represented by the following chemical formula 2.

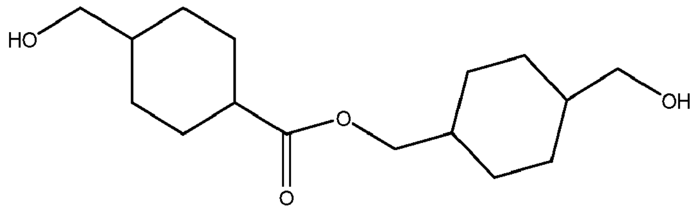

Chemical Formula 1

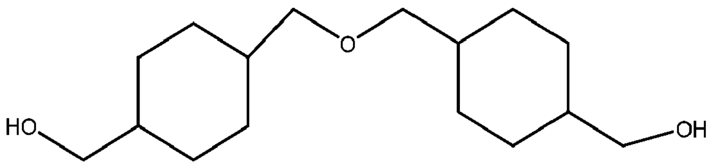

Chemical Formula 2

The compounds of chemical formula 1 and 2 can be copolymerized with aromatic dicarboxylic acid may be one or more selected from a group consisting of terephthalic acid, dimethyl terephthalate, cyclic dicarboxylic acid, isophthalic acid, adipic acid, azelaic acid, naphthalene dicarboxylic acid, and succinic acid.

The diol-derived residue of the copolymers may further include a residue derived from one or more other diols selected from a group consisting of 1,4-cyclohexane dimethanol, 1,2-propanediol, 1,3-propanediol, 1,4-butanediol, 2,2-dimethyl-1,3-propanediol, 1,6-hexanediol, 1,2-cyclohexanediol, 1,4-cyclohexanediol, 1,2-cyclohexane dimethanol, 1,3-cyclohexane dimethanol, 2,2-dimethylpropane-1,3-diol (neopentyl glycol), ethylene glycol, and diethylene glycol. A content of the diol derived residues of the residue derived from 4-(hydroxymethyl)cyclohexylmethyl 4'-(hydroxymethyl)cyclohexane carboxylate, the residue derived from 4,4-(oxybis(methylene)bis) cyclohexane methanol, and other diol-derived residues may be about 10 to 80 mol% based on 100 mol% of the dicarboxylic acid co-monomer.

The polar-polymer may also comprise the polyester based copolymers used in a mixture with polyethylene terephthalate (PET). The mixture may consist of 1 to 99 wt.% of PET and 1 to 99 wt.% of the polyester based copolymers, in order that both components add up to 100 wt.%. Additionally or alternatively the compounds according to chemical formulas 1 and 2 may be used as co-monomers together with a further diol-component, e.g. ethylene glycol, in the preparation of the polyester based copolymers.

The polyester based copolymer may be prepared by reacting the dicarboxylic acid including the aromatic dicarboxylic acid with the diol including 4-(hydroxymethyl)cyclohexylmethyl 4'-(hydroxymethyl)cyclohexane carboxylate represented by chemical formula 1 and 4,4-(oxybis(methylene)bis) cyclohexane methanol represented by chemical formula 2 to perform an esterification reaction and a polycondensation reaction. In this case, other diols such as 1,4-cyclohexane dimethanol, ethylene glycol, diethylene glycol, or the like, as described above may be further reacted, such that a polyester based copolymer further including other diol-derived residues may be prepared.

With regard to the polyether, these may comprise but not limited to compounds that contain at least one polyethyleneglycol moiety and at least one fatty acid moiety coupled to the polyethyleneglycol moiety. The polyethyleneglycol moiety may contain 10 to 25 ethyleneglycol repeating units. The fatty acid moieties may be saturated or unsaturated and may contain 10 to 30 carbon atoms, preferably 16 to 22 carbon atoms. Examples of these fatty acid moieties are oleate, laureate, stearate, palmitate and ricinoleate. A specific preferred example may be ethoxylated sorbitan ester.

The ethoxylated sorbitan ester comprises a sorbitan group which is substituted by four polyethylene glycol substituents. The ethoxylated sorbitan ester may preferably comprise 14 to 26 ethylene glycol repeating units, preferably 16 to 24 ethylene glycol repeating units, more preferably between 18 and 22 repeating units. At least one of the ethylene glycol substituents in the ethoxylated sorbitan ester is connected via an ester bond to a fatty acid moiety. Preferably, at least two of the ethylene glycol substituents in the ethoxylated sorbitan ester are connected via an ester bond to a fatty acid moiety; more preferably at least three of the ethylene glycol substituents are connected via an ester bond to a fatty acid moiety. The fatty acid moieties may be saturated or unsaturated and may contain 10 to 30 carbon atoms, preferably 16 to 22 carbon atoms.

Examples of these fatty acid moieties are oleate, laureate, stearate and palmitate. Most preferred are ethoxylated sorbitan esters comprising four polyethylene glycol substituents and wherein the ester comprises between 18 and 22 ethylene glycol repeating units and wherein three of the ethylene glycol substituents are connected to oleate, laurate or stearate groups.

Examples of ethoxylated sorbitan esters that can be used as polar-polymer are polyoxyethylene (20) sorbitane monolaurate, polyoxyethylene (20) sorbitane dilaurate, polyoxyethylene (20) sorbitane trilaurate, polyoxyethylene (20) sorbitane mono-oleate, polyoxyethylene (20) sorbitane di-oleate, polyoxyethylene (20) sorbitane tri-oleate, polyoxyethylene (20) sorbitane monostearate, polyoxyethylene (20) sorbitane distearate, polyoxyethylene (20) sorbitane tristearate,

and polyoxyethylene (20) sorbitan monooleate, also known as Polysorbate 80 and E433.

Polar compound and mixtures thereof

With respect to the polar compound and according to another embodiment the polar compound or mixture thereof may be selected from the group comprising:

- oligoacrylate with methyl (oligomethylacrylate), ethyl (oligoethylacrylate), propyl (oligopropylacrylate), or butyl (oligobutylacrylate),
- oligomethacrylate with methyl (oligomethylmathacrylate), ethyl (oligoethylmethacrylate), propyl (oligopropylmethacrylate), or butyl (oligobutylmethacrylate),
- cooligomers of acrylic and methacrylic esters including, among others, tert. - Butyl (meth)acrylate, pentyl(meth)acrylate and 2-ethylhexyl(meth)acrylate; (Meth)acrylates derived from unsaturated alcohols, preferably oleyl(meth)acrylate, 2-propynyl(meth)acrylate, allyl(meth)acrylate, vinyl(meth)acrylate;
- aryl(meth)acrylates oligomers, preferably benzyl(meth)acrylate oligomers or phenyl(meth)acrylate oligomers, the aryl radicals each being unsubstituted or up to four times substituted;
- cycloalkyl(meth)acrylates oligomers, preferably 3-vinylcyclohexyl(meth)acrylate oligomers, bornyl (meth)acrylate oligomers;
- hydroxylalkyl (meth)acrylates oligomers, preferably 3- hydroxypropyl (meth)acrylate oligomers, 3,4- dihydroxybutyl(meth)acrylate oligomers, 2-hydroxyethyl(meth)acrylate oligomers, 2-hydroxypropyl(meth)acrylate oligomers;
- glycol di(meth)acrylates oligomers, preferably 1,4-butanediol (meth)acrylate oligomers;
- (meth)acrylates of ether alcohols oligomers, preferably tetrahydrofurfuryl (meth)acrylate oligomers, vinyloxyethoxyethyl(meth)acrylate oligomers;
- oligomers of amides and nitriles of the (meth)acrylic acid, preferably N-(3-dimethylaminopropyl)(meth)acrylamide oligomers, N-(diethylphosphono)(meth)acrylamide oligomers, 1-methacryloylamido-2-methyl-2-propanol oligomers;
- oligomers of sulfur-containing methacrylates, preferably ethylsulfinylethyl(meth)acrylate, 4-thiocyanatobutyl(meth)acrylate oligomers, ethylsulfonylethyl(meth)acrylate oligomers, thiocyanatomethyl(meth)acrylate oligomers, methylsulfinylmethyl(meth)acrylate oligomers, bis((meth)acryloyloxyethyl)sulfide oligomers;
- oligohydric (meth)acrylates, preferably trimethyloylpropanetri(meth)acrylate oligomers;
- acrylonitrile oligomers;
- vinyl ester oligomers, preferably vinyl acetate oligomers;
- styrene oligomers, substituted styrenes oligomers with an alkyl substituent in the side chain, preferably α-methylstyrene and α-ethylstyrene, substituted styrenes oligomers with an alkyl substituent on the ring, preferably vinyl toluene, and p-methylstyrene, halogenated styrene oligomers, preferably monochlorostyrene oligomers, dichlorostyrene oligomers, tribromostyrene oligomers and tetrabromostyrene oligomers;
- heterocyclic vinyl oligomers, preferably 2-vinylpyridine oligomers, 3-vinylpyridine oligomers, 2-methyl-5-vinylpyridine oligomers, 3-ethyl-4-vinylpyridine oligomers, 2,3-dimethyl-5-vinylpyridine oligomers, vinylpyrimidine oligomers, vinylpiperidine oligomers, 9-vinylcarbazole oligomers, 3-vinylcarbazole oligomers, 4-vinylcarbazole oligomers, 1-vinylimidazole oligomers, 2-methyl-1 -vinylimidazole oligomers, N-vinylpyrrolidone oligomers, 2-vinylpyrrolidone oligomers, N-vinylpyrrolidine oligomers, 3-vinylpyrrolidine oligomers, N-vinylcaprolactam oligomers, N-vinylbutyrolactam oligomers, vinyl oxolane oligomers, vinyl furan oligomers, vinyl thiophene oligomers, vinylthiolane oligomers, vinylthiazoles and hydrogenated vinylthiazoles oligomers, vinyloxazoles and hydrogenated vinyloxazoles;
- oligomers of vinyl and isoprenyl ethers;
- maleic acid oligomers, preferably maleic anhydride oligomers, methyl maleic anhydride oligomers, maleimide oligomers, methyl maleimide; and
- cooligomers of ethylene and propylene with acrylic esters, preferably oligoethylen-block-co-oligomethylmethacrylat, oligopropylen-block-co-oligomethylmethacrylat;
- aliphatic and/or aromatic oligoesters, preferably oligocaprolactone, oligoethylenterephthalate (PET), oligotrimethylenterephthalat (PTT), oligobutylenterephthalat (PBT), glycolized oligoglycolterephthaltat (G-PET), amorphes oligoethylenterephthalat (A-PET), oligoesters of terephthalic acid, oligospiro-diol-terephthalate, oligopentaspiroglycolterephthalate (PSG), polycyclohexylenedimethylene-terephthalate, oligoester based cooligomer including a dicarboxylic acid-derived residue including a residue derived from an aromatic dicarboxylic acid and a diol-derived residue including a residue derived from 4-(hydroxymethyl)cyclohexylmethyl-4'-(hydroxymethyl)cyclohexane carboxylate, oligester based cooligomer including a dicarboxylic acid-derived residue including a residue derived from an aromatic dicarboxylic acid and a diol-derived residue including a residue derived from 4,4-(oxybis(methylene)bis) cyclohexane methanol;
- oligocarbonate (PC), 2,2-Bis-(4-hydroxyphenyl)-propan (Bisphenol A) oligocarbonate, 2,2-Bis-(4-hydroxyphenyl)-butan (Bisphenol B) oligocarbonate, 1,1-Bis(4-hydroxyphenyl)cyclohexan (Bisphenol C) oligocarbonate, 2,2'-Methylendiphenol (Bisphenol F) oligocarbonate, 2,2-Bis(3,5-dibrom-4-hydroxyphenyl)propan (Tetrabrombisphenol A) oligocarbonate und 2,2-Bis(3,5-dimethyl-4-hydroxyphenyl)propan (Tetramethylbisphenol A) oligocarbonate, bisphenol S oligocarbonate, dihydroxydiphenylsulfid oligocarbonate, tetramethylbisphenol A oligocarbonate, 1,1-Bis(4-hydroxyphenyl)-3,3,5-trimethylcyclohexane (BPTMC) oligocarbonate, 1,1,1-Tris(4-hydroxyphenyl)-ethane (THPE) oligocarbonate;

- aliphatic oligoamide (PA), preferably PA 6 based on oligocaprolactam, PA 6.6 based on 6,6-hexamethylendiamin and adipic acid, PA 6.66 based on caprolactam, co-poymer of hexamethylendiamin and adipic acid, PA 66.610 based on hexamethylenediamine, cooligomer of adipic acid and sebaic acid, PA 4.6, PA10, PA 12 and PA cooligomers;
- oligourethane (PU),
- polar-cooligomere, maleic anhydride-olefin cooligomer;
- oligoalkylenoxide, oligoalkylene block cooligomer, propylenoxide-ethylenoxide cooligomer, (m)ethylene acrylate-maleic anhydride cooligomer;
- polar-teroligomere, preferably reactive teroligomers of ethylene, acrylic ester and maleic anhydride, or ethylene, methacrylic ester and maleic anhydride, or ethylene, acrylic esters and glycidyl methacrylate, or ethylene, methacrylic esters and glycidyl methacrylate, or ethylene, (meth)acrylic esters and methyl (methyl(meth)acrylate), ethyl (ethy(meth)acrylate), propyl (propyl(meth)acrylate), or butyl (butyl(meth)acrylate), oligoamide, oligoester-oligoamides, or butyl (butyl(meth)acrylate), oligoether-oligoamide cooligomers;
- polar oligomer blends, preferably oligocarbonate/oligoethylenterephthalat blends (PC/PET blends), oligocarbonate/oligobutyleneterephthalate blends (PC/PBT blends), blends of oligocyclohexylene dimethylene terephthalate cooligomer, blends of oligo(butylene-adipate-terephthalate);
- oligoacrylnitril and oligoacrylnitril-cooligomers, preferably oligo acrylonitrile butadiene styrene (ABS), oligo styrene-acrylonitrile;
- oligostyrene and oligostyrene cooligomers, preferably styrene/butadiene co-oligomer (SBR), oligo styrene-isoprene-styrene (SIS), oligo(glycidyl methacrylate) grafted sulfonamide based oligostyrene resin with tertiary amine;
- ethylene-vinyl acetate;
- oligoether, preferably oligoethyleneglycol, oligoethyleneglycol with at least one fatty acid coupled to the oligoethyleneglycol, oligoether with terminating functional groups, preferbyl $NH_2$-terminated oligoethers,
- functionalized oligoacrylamide oligomers, cooligomers and teroligomers, preferably oligo(2-acrylamido-2-aminopropionicacid) (oligoAMPA), oligo(2-acrylamido-2-amino propane sulfonic acid), oligo(N-isopropylacylamide (oligoPNIPAM); oligo (amidoamine-co-acrylic acid) co-oligomer, oligo(N,N-dimethylacrylamide-co-sodium acrylate), oligo(acrylamide-co-sodium acrylate)/oligo(ethylene glycol) semi-IPN, oligo(acrylamide-co-sodium 4-styrenesulfonate), oligo(acrylamide-co-sodium 4-styrenesulfonate)/oligo(ethylene glycol) semi-IPN, oligo(acrylamide-co-sodium methacrylate), oligo(acrylamide-co-sodium methacrylate)/oligo(ethylene glycol) semi-IPN, and/or oligo(N-isopropylacrylamide-co-acrylic acid) andoligo(acrylamide-co-acrylic acid;
- oligo(ether sulfones)/oligo(ethyleneimine) (PES/PEI);
- oligovinylpyrrolidone, preferably oligo(N-vinyl-2-pyrrolidone), oligo(N-vinyl-2-pyrrolidone-co-acrylonitrile) treated with hydroxylamine-hydrochloride
- oligovinyl alcohol;
- oligo(1-naphthylamine)-camphorsulphonic acid; and mixtures thereof.

With regard to the oligester based cooligomers that can be suitable used as a polar compound, these may further include but not limited to a dicarboxylic acid-derived residue including a residue derived from an aromatic dicarboxylic acid and a diol-derived residue including a residue derived from 4-(hydroxymethyl)cyclohexylmethyl-4'-(hydroxymethyl)cyclohexane carboxylate represented by the following chemical formula 1 and a residue derived from 4,4-(oxybis(methylene)bis) cyclohexane methanol represented by the following chemical formula 2.

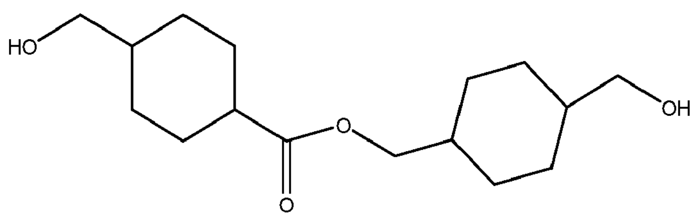

Chemical Formula 1

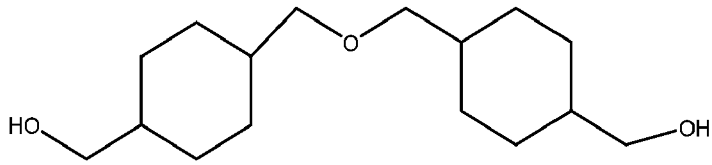

Chemical Formula 2

The compounds of chemical formula 1 and 2 can be co-oligomerized with aromatic dicarboxylic acid may be one or more selected from a group consisting of terephthalic acid, dimethyl terephthalate, cyclic dicarboxylic acid, isophthalic acid, adipic acid, azelaic acid, naphthalene dicarboxylic acid, and succinic acid.

The diol-derived residue of the cooligomers may further include a residue derived from one or more other diols selected from a group consisting of 1,4-cyclohexane dimethanol, 1,2-propanediol, 1,3-propanediol, 1,4-butanediol, 2,2-dimethyl-1,3-propanediol, 1,6-hexanediol, 1,2-cyclohexanediol, 1,4-cyclohexanediol, 1,2-cyclohexane dimethanol, 1,3-cyclohexane dimethanol, 2,2-dimethylpropane-1,3-diol (neopentyl glycol), ethylene glycol, and diethylene glycol. A content of the diol derived residues of the residue derived from 4-(hydroxymethyl)cyclohexylmethyl 4'-(hydroxymethyl)cyclohexane carboxylate, the residue derived from 4,4-(oxybis(methylene)bis) cyclohexane methanol, and other diol-derived residues may be about 10 to 80 mol% based on 100 mol% of the dicarboxylic acid co-monomer.

The polar compound may also comprise the oligoester based cooligomers used in a mixture with oligoethylene terephthalate (PET). The mixture may consist of 1 to 99 wt.% of PET and 1 to 99 wt.% of the oligoester based cooligomers, in order that both components add up to 100 wt.%. Additionally or alternatively, the compounds according to chemical formulas 1 and 2 may be used as co-monomers together with a further diol-component, e.g. ethylene glycol, in the preparation of the oligoester based cooligomers.

The oligoester based cooligomer may be prepared by reacting the dicarboxylic acid including the aromatic dicarboxylic acid with the diol including 4-(hydroxymethyl)cyclohexylmethyl 4'-(hydroxymethyl)cyclohexane carboxylate represented by chemical formula 1 and 4,4-(oxybis(methylene)bis) cyclohexane methanol represented by chemical formula 2 to perform an esterification reaction and a oligocondensation reaction. In this case, other diols such as 1,4-cyclohexane dimethanol, ethylene glycol, diethylene glycol, or the like, as described above may be further reacted, such that a oligoester based cooligomer further including other diol-derived residues may be prepared.

With regard to the oligoether these may comprise but not limited to compounds that contains at least one oligoethyleneglycol moiety and at least one fatty acid moiety coupled to the oligoethyleneglycol moiety. The oligoethyleneglycol moiety may contain 8 or 9 ethyleneglycol repeating units.

The fatty acid moieties may be saturated or unsaturated and may contain 10 to 30 carbon atoms, preferably 16 to 22 carbon atoms.

Examples of these fatty acid moieties are oleate, laureate, stearate, palmitate and ricinoleate. Examples of compound that contain at least one polyethyleneglycol moiety and at least one fatty acid moiety coupled to the polyethyleneglycol moiety include PEG 300 di-oleate, PEG 300-distearate, PEG 400 dioleate, PEG 400 distearate, PEG 400 monooleate, PEG 400 monoricinoleate, PEG 400 monostearate.

A specific preferred example of the polar compound may be ethoxylated sorbitan oligoester. The ethoxylated sorbitan oligoester comprises a sorbitan group which is substituted by four oligoethylene glycol substituents. The ethoxylated sorbitan ester may preferably comprise 14 to 26 ethylene glycol repeating units, preferably 16 to 24 ethylene glycol repeating units, more preferably between 18 and 22 repeating units. At least one of the ethylene glycol substituents in the ethoxylated sorbitan ester is connected via an ester bond to a fatty acid moiety. Preferably, at least two of the ethylene glycol substituents in the ethoxylated sorbitan ester are connected via an ester bond to a fatty acid moiety; more preferably at least three of the ethylene glycol substituents are connected via an ester bond to a fatty acid moiety. The fatty acid moieties may be saturated or unsaturated and may contain 10 to 30 carbon atoms, preferably 16 to 22 carbon atoms.

Examples of these fatty acid moieties are oleate, laureate, stearate and palmitate. Most preferred are ethoxylated sorbitan esters comprising four oligoethylene glycol substituents and wherein the ester comprises between 18 and 22 ethylene glycol repeating units and wherein three of the ethylene glycol substituents are connected to oleate, laurate or stearate groups.

Furthermore, the polar compound may be selected from the group comprising aliphatic acids $CH_3-[CH_2]_n-COOH$ acids (n about $\geq$ 3), amino acids, carboxylic acid amide, hydroxyl acids, fatty acids, aliphatic or aliphatic/aromatic aldehydes and ketones, esters, pentaerythritol, pentaerythritol ester preferably carboxylic acid ester, benzoic acid esters comprising benzylbenzoate or phenylbenzoate, phenylether, alcohols and polyvalent alcohols, preferably glycerine, amines. Preferably the polar compound is containing a heteroatom selected from N, O, S and/or halogen. Preferably, halogens may be selected from the group comprising Cl, Br and I.

The carboxylic acid amide may comprise a compound according to formula $C_2H_4(NHC(O)R^3)_2$, wherein $R^3$ is a fatty acid moiety comprising 10-17 carbon atoms. The fatty acid moieties may be saturated or unsaturated.

Pentaerythritol may comprise a compound according to formula $C(CH_2OR)_4$, wherein R may be H, or wherein R may be a fatty acid moiety comprising 5-8 carbon atoms. The fatty acid moieties can be saturated or unsaturated. R may be also another moiety like ether, amide and/or urethane. As Pentaerythritol Perstorp Charmor PM 40 may be used.

Furthermore, the polar compound may be an ether. Ether these may comprise but not limited to compounds that contains at least one ethylene glycol moiety and at least one fatty acid moiety coupled to the ethylene glycol moiety.

Examples of compounds that contains at least one ethylene glycol moiety and at least one fatty acid moiety coupled to the polyethylene glycol moiety include PEG 300-monostearate, PEG 400 monolaurate.

The carboxylic acid ester may comprise a compound according to the following chemical formula 3:

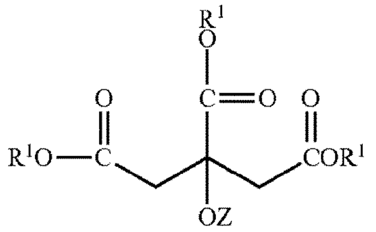

Chemical Formula 3

wherein $R^1$ is an alkyl group comprising 1-20 carbon atoms and Z is hydrogen or a group according to the formula $C(O)R^2$, wherein $R^2$ is an alkyl group comprising 1-20 carbon atoms. $R^1$ may be the same or different and is an alkyl group comprising 1-20 carbon atoms, preferably 1-15 carbon atoms, more preferably 1-10 carbon atoms. $R^2$ is an alkyl group comprising 1-20 carbon atoms, preferably 1-10 carbon atoms, more preferably 1-5 carbon atoms. Non-limiting examples of the carboxylic acid ester are triethylcitrate, tributylcitrate, trihexylcitrate, acetyltributylcitrate (ATBC; $R^1$ = $C_4H_9$, Z = $CH_3CO$), propanoyltributylcitrate, acetyltrihexylcitrate and butanoyltriethylcitrate.

Furthermore, as polar compound 4-(hydroxymethyl)cyclohexylmethyl-4'-(hydroxymethyl)cyclohexane carboxylate represented by the chemical formula 1, 4,4-(oxybis(methylene)bis) cyclohexane methanol represented by the chemical formula 2, and mixtures thereof may be used:

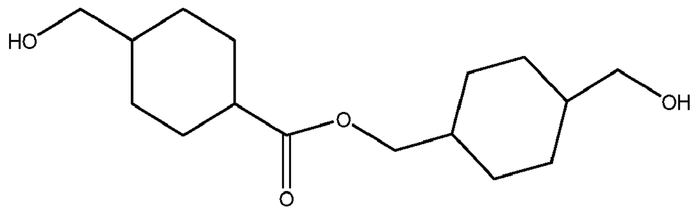

Chemical Formula 1

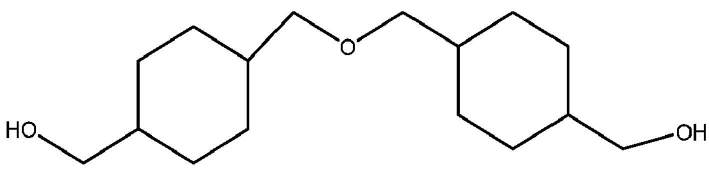

Chemical Formula 2

Polar solvent

The polar solvent enhances the decolorization process. According to a preferred embodiment the polar solvent may be liquid at about 23 °C. Preferably the polar solvent comprises at least one polar solvent or a mixture of polar solvents, wherein the polar solvent is a solvent or solvent mixture having a dipole, and is preferably selected from the group comprising polar organic solvent; further preferred the polar solvent forms a homogenous mixture with water and further preferred the polar solvent is a mixture of liquids forming a homogeneous mixture when added together and when added to water. In the decoloring process the dye enriches in the water phase and can be separated therefrom by known techniques. Using a polar solvent that is liquid at about 23 °C in the decolorization process may facilitate decolorization since liquid solvents may be easy to handle.

The polar solvent preferably has a dipole moment, more preferably an electric dipole moment. The dipole moments may be due to a non-uniform distribution of positive and negative charges on the various atoms. The polar solvent may have a permanent dipole, an instantaneous dipole and/or an induced dipole. More preferably it may have a permanent dipole.

It may be advantageous to use a mixture of polar solvents. It may be also possible to use different polar solvents

including organic polar solvents that may not form a homogenous mixture. The mixture of solvents can be a homogenous mixture, an emulsion or showing phase separation.

According to the above and according to a preferred embodiment the polar organic solvent or polar organic solvent mixture may be selected from the group comprising $C_1$ to $C_6$ - alcohol, preferably ethanol and isopropanol, glycols such as diethylene glycol and its oligomers and ethers, $C_3$ to $C_6$ - ketone, preferably acetone, $C_2$ to $C_6$ - aldehyde, $C_1$ to $C_6$ - carboxylic acid and their derivatives such as acid chlorides or acid amides, other polar solvents liquid at 23 °C, preferably dimethylsulfoxide (DMSO), dimethylformamide (DMF), benzylic alcohols such as benzyl alcohol, linear or cyclic aliphatic ethers, preferably diethyl ether, diisopropyl ether, dibutyl ether or tetrahydrofuran, aliphatic esters such as methyl acetate, ethyl acetate, butyl acetate, glycerin triacetate, acetyltributylcitrate (ATBC), halogenated solvents such as dichloromethane or trichloromethane or benzyl chloride.

Nonpolar solvent

According to a preferred embodiment of the invention the decoloring bath further comprises a nonpolar solvent. The nonpolar solvent may enhance the decolorization process, especially for non-polar plastic articles.

According to a preferred embodiment the nonpolar solvent may be liquid at about 23 °C. Preferably the nonpolar solvent comprises at least one nonpolar solvent or a mixture of nonpolar solvents, wherein the nonpolar solvent is a solvent or solvent mixture not having a dipole, and is preferably selected from the group comprising nonpolar organic solvents. The mixture of solvents can be a homogenous mixture, an emulsion or showing phase separation. The nonpolar solvent may not form a homogenous mixture with water.

According to the above and according to a preferred embodiment the nonpolar organic solvent or nonpolar organic solvent mixture may be selected from the group comprising straight, branched, saturated, unsaturated, and/or cyclic aliphatic C5 to C12 hydrocarbons, and aromatic C6 to C12 hydrocarbons. A preferred nonpolar solvent is a C9-aromatic hydrocarbon.

Levelling agent

With respect to result of the decoloration process it may be advantageous when the decoloring bath further comprises the levelling agent. According to another preferred embodiment the decoloring bath comprises a levelling agent, wherein the levelling agent is preferably selected from the group comprising aromatic esters such as benzoic acid esters such as benzyl benzoate, alkyl benzoates such as methyl or ethyl benzoates, phthalic acid esters, naphthalic acid ester, polyphenylether, phenoles, aromatic alcohols, aromatic ketones, aryl halides, such as halogenized benzene, halogenzide toluene; N-alkylphthalimide, methylnaphthaline, diphenyle, diphenylether, naphtholether, and oxybiphenyle. Levelling agents may also be of natural origin such as coumarin or vanillin.

Preferably the levelling agent does not form a homogenous solution with water. The levelling agent may decrease the time that is used for decoloring the granulate and/or powder.

Further components in the decoloring bath

With respect to result of the decoloration process it may be advantageous when the decoloring bath further comprises additional auxiliaries. These are, for example, analogous dispersants as described above in the masterbatch, in particular non-ionic dispersants such as aliphatic esters, especially glycerin triacetate, which is also called triacetin, mono-$C_{10}$ to $C_{13}$-alkyl derivatives of benzenesulfonic acid as well as ethoxylates of long-chain alcohols, especially iso-tridecanol ethoxylate.

pH

To enable the decolorization process the pH of the decoloring bath is alkaline. Preferably the decoloring bath has a pH about ≥ 10, preferably about ≥ 11, more preferably about ≥ 12, and wherein the pH of the decoloring bath is adjusted by adding a base, preferably NaOH.

The use of organic bases such as ammonia in order to adjust the pH is also possible. In case the polar decoloring agent is used, one of the most important factors affecting the dye absorption capacity (dye absorption capacity in % = [g of dye to be absorbed]/[g of polar decoloring agent] * 100) is the pH of the decoloring bath. The efficiency of adsorption is dependent on pH, since variation in pH leads to the variation in the degree of ionisation of the dye to be absorbed and the surface properties of the polar decoloring agent.

During the saponification of the alkali clearable dyes, anionic molecules are formed, e.g. comparable to acidic or anionic dyes. Therefore, when the polar decoloring agent is used, either in addition to the oxidizing or reducing agent or alternative to the oxidizing or reducing agent, the pH of the decoloring bath should ideally be acidic in order to cationize

the polar decoloring agent and to increase thedye absorption capacity of the polar decoloring agent. On the other hand, the saponification of alkali clearable dyes as the name of the dyes indicates ideally takes place in a basic decoloring bath. Therefore, a compromise is necessary and a high dosage of polar decoloring agent is preferred to compensate the reduced dye absorption capacity of the polar decoloring agent in the basic decoloring bath.

The amount of polar decoloring agent required depends on the amount of dye in the plastic article and the weight ratio of the granulate and/or powder of the plastic article to the decoloring bath. To this regard, when using the polar decoloring agent, the decoloring bath preferably has a pH about ≥ 10, preferably about ≥ 11, more preferably about ≥ 12, wherein the pH of the decoloring bath is adjusted by adding a base, preferably NaOH, wherein the decoloring bath preferably contains 0.1 to 100 g/L polar decoloring agent, preferably 1 to 50 g/L, more preferably 5 to 25 g/L with respect to the volume of the decoloring bath.

Temperature

It may be preferred that the decoloring bath has a temperature adjusted according to specific properties of the colored plastic article and/or the plastic basis material. Preferably, the decoloring bath has a temperature selected ≥ a glass-transition temperature $T_g$ and below a melting temperature $T_m$ of the plastic basis material. This may have the advantages that the decoloring of the granulate and/or powder is speeded up. Furthermore, in case a solid polar decoloring agent is used, the temperature of the decoloring bath may be selected ≥ the glass-transition temperature $T_g$ and below the melting temperature $T_m$ of the solid decoloring agent. Preferable the decoloring bath has a temperature ≥ 80 °C to ≤ 130 °C.

The glass transition temperature $T_g$ may be the gradual and reversible transition in amorphous regions of the plastic basis material and/or the solid polar decoloring agent from a hard and relatively brittle state into a viscous or rubbery state as the temperature is increased. The glass transition temperature $T_g$ of the plastic basis material, the uncolored plastic article and/or the solid polar decoloring agent may be determined by differential scanning calorimetry (DSC), which is a thermoanalytical technique in which the difference in the amount of heat required to increase the temperature of a sample and reference is measured as a function of temperature.

The glass transition temperature $T_g$ of the plastic basis material, the colored plastic article and/or the solid polar decoloring agent may be determined according to the following standards: DIN 51007 (Thermal Analysis - Differential Thermal Analysis and Differential Scanning Calorimetry - General Principles), ASTM E 474, ASTM D 3418, DIN EN ISO 11357-1 (Plastics - Differential Scanning Thermal Analysis Part 1: General principles. (2008)), ISO 11357-2 (Plastics - Differential Scanning Calorimetry Part 2: Determination of the glass transition temperature. (1999)), ISO / DIS 11357-3 (Plastics - Differential Scanning Calorimetry Part 3: Determination of the melting and crystallization temperature and the melting and crystallization enthalpy. (2009)), ISO 11357-4 (Plastics - Differential Scanning Thermal Analysis (DSC) Part 4: Determination of specific heat capacity. (2005)).

The glass transition temperature $T_g$ of the plastic basis material, the colored plastic article and/or the solid polar decoloring agent may be determined using a Mettler Toledo DSC 3+ differential calorimeter, a sample amount of 10 +/- 1 mg, nitrogen as purge gas, and the following settings: 1. Heating: -40 °C to 280 °C with 20 °C/min, Hold: 3 minutes at 200 °C, Cooling: 280 °C to -40 °C at 10 °C/min, Hold: 5 minutes at -20 °C, 2. Heating: -40 °C to 300 °C at 20 °C/min.

The melting temperature $T_m$ of the plastic basis material, the colored plastic article and/or the solid polar decoloring agent may be determined according to the same standards and procedures as used for determining the glass transition temperature $T_g$ of the plastic basis material.

Time

According to another embodiment the granulates of the colored plastic article are exposed to the decoloring for about ≥ 1 minute to about ≤ 240 minutes, preferably about ≥ 5 minute to about ≤ 180 minutes, more preferably about ≥ 10 minute to about ≤ 60 minutes.

DETAILED DESCRIPTION OF THE EXAMPLES

The invention will be described in the following with reference to the exemplary examples 1a to 6a and the comparative examples 1b, 1c, 1d to 6b, 6c, 6d. Tables 3 to 7 specify the composition of the color masterbatch for the examples. The comparative examples are matched in the composition of the color masterbatch to the exemplary examples 1a to 6a, however in the comparative example, the coloring agent is the saponified form of the alkali clearable dye, and/or the water-soluble or water-swellable component is omitted.

**a) Producing the colored plastic article**

For all examples the procedure for producing a colored plastic article is as follows:
A color masterbatch is produced by an extrusion process in a twin-screw extruder by mixing the individual components of the color masterbatch given in tables 2 to 7 in the specified weight ratios.

For examples 1 to 5, a colored plastic article in the form of a plate W x H x T = 30 x 50 x 1 $mm^3$ is produced in an extruder by an injection molding process by mixing a plastic basis material with the above color masterbatch, in a weight ratio of 96:4 (plastic basis material: color masterbatch), wherein the plastic basis material is PE (Lyondell Basell Hostalen ACP 5831 D).

For example 6, a colored plastic article in the form of a plate W x H x T = 30 x 50 x 1 $mm^3$ is produced in an extruder by an injection molding process by mixing a plastic basis material with the above color masterbatch, in a weight ratio of 99:1 (plastic basis material: color masterbatch), wherein the plastic basis material is PE (Lyondell Basell Hostalen ACP 5831 D). The composition of the masterbatch for example 6 (Table 7) is the same as for example 1 (Table 2), however the weight ratio of the plastic basis material to the color masterbatch is 99:1 instead of 96:4 when producing the plastic article.

The compositions of the color master batches are given in the following tables 2 to 7. With regard to the coloring agent, please refer to table 1 for the chemical structure of the alkali clearable dye.

The colours of the plates produced were measured. These results are given in Table 8. Colors can be described in the RGB or in the Lab color space. In the examples the coloration of the samples is determined in the Lab color space and measured with a Spectrometer Konika-Minolta CM-3600A - according to the guideline of the INSTRUCTION MANUAL CM-3600A (©2011-2013 KONICA MINOLTA, INC.). The Lab color can be converted into the RGB color.

The principle of the RGB color space

This principle is based on the three-color theory. The RGB color space works on the principle of the additive color space. This means that it reproduces the entire color range by mixing the basic colors red, green and blue.
The RGB color space can be found in all self-illuminating systems, such as monitors or television screens. All possible colors are defined by their red, green and blue components and mapped accordingly by the overlay of colored light.

The principle of the Lab color space

Unlike the RGB color space, the Lab color space is based on counter-color theory. This is based on the assumption that three separate chemical processes take place in the human retina, which always contain two opposite colors, the two opposite colors striving for balance with one another. An example pair would be the combination of blue and yellow. Lab is used, for example, for photo editing software. While the RGB color space is device-dependent, it is not the Lab color space. RGB includes - regardless of the device - all potentially possible colors, which above all enables the conversion of color definitions from one device to the other.

Convert RGB to Lab

It is important for the conversion that Lab coordinates separate brightness information L from the rest of the color information. RGB images do not have such a separation - a change in brightness therefore changes the entire color information.
Convert sRGB to Lab: http://colormine.org/convert/rgb-to-lab
Conversion Lab to sRGB: http://colormine.org/convert/lab-to-rgb

The Lab - measuring device

The Lab is measured with a - Spectrometer Konika-Minolta CM-3600A - according to the guideline of the INSTRUCTION MANUAL CM-3600A (©2011-2013 KONICA MINOLTA, INC.).

| **Table 2: Example I** |
| --- |
| **Carrier:** ethyl-methacrylate-copolymer (Lotryl 18MA02)<br>**Water-soluble polymer:** Polyvinyl alcohol (Mowiflex M 05)<br>**Dispersion Agent:** Glycerin triacetate |

(continued)

| | Carrier | Water-soluble polymer | Dispersing Agent | Coloring agent |
|---|---|---|---|---|
| 1a | 71 wt% | 20 wt% | 4 wt% | alkali-clearable dye A1 (Disperse Red 278) 5 wt% |
| 1b | 71 wt% | 20 wt% | 4 wt% | saponified form of alkali-clearable dye A1 5 wt% |
| 1c | 91 wt% | - | 4 wt% | alkali-clearable dye A1 (Disperse Red 278) 5 wt% |
| 1d | 91 wt% | - | 4 wt% | saponified form of alkali-clearable dye A1 5 wt% |

**Table 3: Example II**

**First carrier:** LDPE
**Second carrier:** ethyl-methacrylate-copolymer (Lotryl 18MA02)
**Water-soluble polymer:** Polyvinyl alcohol (Mowiflex M 05)
**Crosslinking agent:** MAA-grafted EVA (Orevac 18211)
**Further Component:** Tartaric Acid
**Dispersing agent:** acetyltributylcitrate (ATBC)

| | First carrier | Second carrier | Water-soluble polymer | Crosslinking agent | Further Component | Dispersing agent | Coloring agent |
|---|---|---|---|---|---|---|---|
| 2a | 26 wt% | 35 wt% | 20 wt% | 1 wt% | 4 wt% | 5 wt% | alkali-clearable dye A6: Bemacron Red HP-LTD 1 9 wt% |
| 2b | 29 wt% | 35 wt% | 20 wt% | 1 wt% | 4 wt% | 5 wt% | saponified form of alkali-clearable dye A6 (Bemacron Red HP-LTD 1) 6 wt% |
| 2c | 36 wt% | 50 wt% | - | - | - | 5 wt% | alkali-clearable dye A6: Bemacron Red HP-LTD 1 9 wt% |
| 2d | 39 wt% | 50 wt% | - | - | - | 5 wt% | saponified form of alkali-clearable dye A6 (Bemacron Red HP-LTD 1) 6 wt% |

**Table 4: Example III**

**First carrier:** LDPE
**Second carrier:** ethyl-methacrylate-copolymer (Lotryl 18MA02)
**Water-soluble polymer:** acrylamide-acrylic acid-copolymer; 80% acrylamide, Mw = 520.000; Mw/Mn = 3.5
**Water-swellable compound:** internally cross-linked sodium carboxymethyl cellulose (Dupont: Ac-Di-Sol)
**Dispersing agent:** acetyltributylcitrate (ATBC)

(continued)

| | First carrier | Second carrier | Water-soluble polymer | Water-swellable compound | Dispersi ng agent | Coloring agent |
|---|---|---|---|---|---|---|
| 3a | 29 wt% | 40 wt% | 15 wt% | 5 wt% | 5 wt% | alkali-clearable dye A12 ($X = SO_2F$, R = H) 6 wt% |
| 3b | 29 wt% | 40 wt% | 15 wt% | 5 wt% | 5 wt% | saponified form of alkali-clearable dye A12 ($X = SO_2F$, R = H) 6 wt% |
| 3c | 37 wt% | 52 wt% | - | - | 5 wt% | alkali-clearable dye A12 ($X = SO_2F$, R = H) 6 wt% |
| 3d | 37 wt% | 52 wt% | - | - | 5 wt% | saponified form of alkali-clearable dye A12 ($X = SO_2F$, R = H) 6 wt% |

**Table 5: Example IV**

**First carrier:** LDPE
**Second carrier:** ethyl-methacrylate-copolymer (Lotryl 18MA02)
**Water-soluble polymer:** Polyvinyl pyrrolidone (BASF, Sokalan K30 P)
**Water-swellable compound:** microcrystalline cellulose (MCC I, MCC SANAQ)
**Dispersing agent:** acetyltributylcitrate (ATBC)

| | First carrier | Second carrier | Water-soluble polymer | Water-swellable compound | Dispersing agent | Coloring agent |
|---|---|---|---|---|---|---|
| 4a | 30 wt% | 39 wt% | 10 wt% | 10 wt% | 5 wt% | alkali-clearable dye A16 (Disperse Green 9) 6 wt% |
| 4b | | | | | | |
| 4c | 39 wt% | 50 wt% | - | - | 5 wt% | alkali-clearable dye A16 (Disperse Green 9) 6 wt% |
| 4d | | | | | | |

Since the saponified form of the alkali-clearable dye A16 was not commercially available, no comparative example 4b and 4d was produced.

**Table 6: Example V**

**First carrier:** LDPE
**Second carrier:** ethyl-methacrylate-copolymer (Lotryl 18MA02)
**Water-soluble polymer:** Polyvinyl pyrrolidone (BASF, Sokalan K30 P)
**Water-swellable compound:** microcrystalline cellulose (MCC I, MCC SANAQ)
**Further Component:** Citric Acid
**Dispersing agent:** acetyltributylcitrate (ATBC)

(continued)

| | First carrier | Second carrier | Water-soluble polymer | Water-swellable compound | Further Compon ent | Dispers ing agent | Coloring agent |
|---|---|---|---|---|---|---|---|
| 5a | 25 wt% | 40 wt% | 10 wt% | 10 wt% | 5 wt% | 4 wt% | alkali-clearable dye A18 (R = H, X = $CH_3$, Y = $CH_2Ph$) 6 wt% |
| 5b | | | | | | | |
| 5c | 35 wt% | 55 wt% | - | - | - | 4 wt% | alkali-clearable dye A18 (R = H, X = $CH_3$, Y = $CH_2Ph$) 6 wt% |
| 5d | | | | | | | |

Since the saponified form of the alkali-clearable dye A18 (R = H, X = $CH_3$, Y = $CH_2Ph$) was not commercially available, no comparative example 5b and 5d was produced.

| **Table 7: Example VI** | | | | |
|---|---|---|---|---|
| **Carrier:** ethyl-methacrylate-copolymer (Lotryl 18MA02)<br>**Water-soluble polymer:** Polyvinyl alcohol (Mowiflex M 05)<br>**Dispersion Agent:** Glycerin triacetate | | | | |
| | **Carrier** | **Water-soluble polymer** | **Dispersing Agent** | **Coloring agent** |
| 6a | 71 wt% | 20 wt% | 4 wt% | alkali-clearable dye A1 (Disperse Red 278) 5 wt% |
| 6b | 71 wt% | 20 wt% | 4 wt% | saponified form of alkali-clearable dye A1 5 wt% |
| 6c | 91 wt% | - | 4 wt% | alkali-clearable dye A1 (Disperse Red 278) 5 wt% |
| 6d | 91 wt% | - | 4 wt% | saponified form of alkali-clearable dye A1 5 wt% |

According to the formulations, plates with the following colouring were obtained (Table 8):

| **Table 8** | | |
|---|---|---|
| colored plastic article | RGB | Lab |
| 1a | 214/0/0 | 45/70/59 |
| 1b | 255/42/0 | 55/75/68 |
| 1c | 214/4/55 | 45/71/35 |
| 1d | 255/42/0 | 55/75/68 |
| 2a | 181/0/6 | 38/62/50 |
| 2b | 218/0/0 | 45/72/70 |
| 2c | 185/3/9 | 39/63/50 |
| 2d | 215/11/0 | 45/69/78 |
| 3a | 223/219/0 | 85/-18/85 |

(continued)

| Table 8 | | |
|---|---|---|
| colored plastic article | RGB | Lab |
| 3b | 252/228/2 | 90/-10/89 |
| 3c | 225/206/22 | 82/-10/80 |
| 3d | 252/200/0 | 88/-6/88 |
| 4a | 0/128/0 | 46/52/50 |
| 4c | 1122/23 | 44/-48/43 |
| 5a | 32/100/173 | 42/6/-45 |
| 5c | 35/107/187 | 45/7/-48 |
| 6a | 255/97/82 | 62/59/40 |
| 6b | 251/111/101 | 64/53/32 |
| 6c | 246/92/95 | 60/59/30 |
| 6d | 250/101/91 | 62/56/35 |

The saponified dyes to produce samples 4b, 4d, 5b and 5d were not available.

**Color stability**

The color stability of the plastic articles produced according to the above exemplary examples 1a to 6a and comparative examples was evaluated by different migration tests. The following table 9 summarizes the migration tests (MT) that have been carried out:

| Table 9: Migration Tests | | | | |
|---|---|---|---|---|
| | | Medium/regulation | Temperature | Duration |
| Contact Migration Test | MT 1.1 | PVC | 50 °C | 5 h |
| | MT 1.2 | According to DIN EN ISO 105-E04 | | |
| Extraction Migration Tests | MT 2.1 | Ethanol 95% | 40 °C | 2 h |
| | MT 2.2 | Acetic Acid 3% | 60 °C | 2 h |
| | MT 2.3 | $NaHCO_3$ 0,1% | 60 °C | 2 h |
| | MT 2.4 | Ethanol 20% and Acetic acid 3% | 40 °C | 24 h |
| | MT 2.5 | According to DIN EN ISO 105-C06 C2S | | |

Contact Migration Test MT 1.1 and MT 1.2

The contact migration test MT 1.1 is performed by means of a perspirometer. The individual test specimens are covered on both sides with monomer-softened white PVC and clamped into the perspirometer separated by acrylic plates. The perspirometer remains in a heating cabinet at 50 °C for 5 hours. After taking out the samples, the evaluation is carried out by visual assessment of the change in color of the soft PVC. The contact migration test MT 1.2 was carried out according to DIN EN ISO 105-E04.

Extraction Migration Test MT 2.1 to 2.5

For the Extraction Migration Tests MT 2.1 to 2.4 the plastic article was extracted in a round bottom flask with reflux condenser under stirring in the specified medium and for the specified time. The plastic article was then removed from the extraction medium and rinsed under warm water. The extraction medium, the polar decolring agent and the plastic article are evaluated visually and/or by measuring the color intensity in comparison before and after. The Extraction

Migration Test MT 2.5 was carried out according to DIN EN ISO 105-C06 C2S.

The color stability of the plastics articles within the migration tests was assessed by visually comparing the color of the extraction medium before and after the migration test, the polar decoloring agent before and after the migration test and/or the percentage loss of color strength K/S according to Kubelca-Munk of the plastic article before and after the migration test. The polar decoloring agent is a poly amide (PA6, melting point 220°C, viscosity number (acc. to ISO307; 96% sulfuric acid) 187 -203 g/cm$^3$; spherical granulate with diameter 2,0 - 2,5mm). Color strength according to Kubelca-Munk was measured and calculated by the spectrophotometer Konica-Minolta 3600A at max. absorbance. The remaining color strength is calculated as follows:

$$reamining\ color\ strength = 1 - \frac{(color\ strength\ before - color\ strength\ after)}{color\ strength\ before}\ in\ \%$$

*(before = before decoloring; after = after decoloring)*

According to Kubelka-Munk, there is a linear relationship between the color strength and the dye content or concentration in a plastic. Therefore, a remaining color strength in percent after decoloration corresponds to the remaining dye content or the dye concentration after decoloration.

The assessment of the migration tests was rated by points according to the following Table 10:

**Table 10**

| Points | Visual inspection of medium | Visual inspection of polar decoloring agent | Remaining color strength of plastic article |
|---|---|---|---|
| 1 | Medium unchanged clear, transparent | Polar decoloring agent unchanged colorless | Plastic article not decolored, remaining color intensity ≥ 90% |
| 2 | Medium weakly colored and color only visible against white background | Polar decoloring agent weakly colored and color only visible against white background | Plastic article decolored, remaining color intensity ≥ 75% and < 90% |
| 3 | medium recognizable colored | Polar decoloring agent recognizable colored | Plastic article well decolored, remaining color intensity ≥ 50% and < 75% |
| 4 | medium well recognizable colored | Polar decoloring agent well recognizable colored | Plastic article very well decolored, remaining color intensity ≥ 30% and < 50% |
| 5 | Medium heavily colored | Polar decoloring agent heavily colored | Plastic article highly decolored, remaining color strength < 30% |

The numbers in the left column are counted as points in the evaluation. The smaller the total number of points, the higher the color stability.

As shown in tables 11 to 16 the following results for the color stability of the plastic article have been found:

**Table 11**

| | **1a** | **1b** | **1c** | **1d** |
|---|---|---|---|---|
| **MT 1.1** | 2 | 2 | 2 | 2 |
| **MT 1.2** | 1 | 2 | 1 | 2 |
| **MT 2.1** | 2 | 2 | 2 | 1 |
| **MT 2.2** | 2 | 2 | 1 | 2 |
| **MT 2.3** | 2 | 2 | 1 | 1 |
| **MT 2.4** | 2 | 3 | 1 | 2 |

(continued)

| Table 11 | | | | |
|---|---|---|---|---|
| | **1a** | **1b** | **1c** | **1d** |
| **MT 2.5** | 2 | 3 | 1 | 1 |
| **TOTAL** | **13** | **16** | **9** | **11** |

| Table 12 | | | | |
|---|---|---|---|---|
| | **2a** | **2b** | **2c** | **2d** |
| **MT 1.1** | 2 | 1 | 1 | 1 |
| **MT 1.2** | 2 | 2 | 2 | 2 |
| **MT 2.1** | 2 | 2 | 2 | 1 |
| **MT 2.2** | 1 | 2 | 1 | 1 |
| **MT 2.3** | 2 | 3 | 1 | 1 |
| **MT 2.4** | 2 | 3 | 2 | 2 |
| **MT 2.5** | 2 | 3 | 2 | 2 |
| **TOTAL** | **13** | **16** | **11** | **10** |

| Table 13 | | | | |
|---|---|---|---|---|
| | **3a** | **3b** | **3c** | **3d** |
| **MT 1.1** | 2 | 2 | 2 | 2 |
| **MT 1.2** | 2 | 3 | 1 | 1 |
| **MT 2.1** | 2 | 1 | 2 | 1 |
| **MT 2.2** | 1 | 3 | 1 | 1 |
| **MT 2.3** | 1 | 3 | 1 | 2 |
| **MT 2.4** | 2 | 2 | 2 | 2 |
| **MT 2.5** | 2 | 3 | 1 | 2 |
| **TOTAL** | **12** | **17** | **10** | **12** |

| Table 14 | | |
|---|---|---|
| | **4a** | **4c** |
| **MT 1.1** | 3 | 2 |
| **MT 1.2** | 2 | 1 |
| **MT 2.1** | 3 | 2 |
| **MT 2.2** | 1 | 2 |
| **MT 2.3** | 2 | 1 |
| **MT 2.4** | 2 | 2 |
| **MT 2.5** | 2 | 2 |
| **TOTAL** | **15** | **12** |

| Table 15 | | |
|---|---|---|
| | **5a** | **5c** |
| **MT 1.1** | 1 | 1 |
| **MT 1.2** | 2 | 1 |
| **MT 2.1** | 1 | 2 |
| **MT 2.2** | 1 | 1 |
| **MT 2.3** | 2 | 1 |
| **MT 2.4** | 2 | 2 |
| **MT 2.5** | 2 | 1 |
| **TOTAL** | **11** | **9** |

| Table 16 | | | | |
|---|---|---|---|---|
| | **6a** | **6b** | **6c** | **6d** |
| **MT 1.1** | 1 | 1 | 1 | 1 |
| **MT 1.2** | 1 | 2 | 1 | 2 |
| **MT 2.1** | 1 | 2 | 1 | 1 |
| **MT 2.2** | 1 | 2 | 1 | 1 |
| **MT 2.3** | 1 | 2 | 1 | 1 |
| **MT 2.4** | 1 | 2 | 1 | 2 |
| **MT 2.5** | 2 | 2 | 1 | 1 |
| **TOTAL** | **8** | **13** | **7** | **9** |

MT 1.1 - MT 2.5: Assessment of the coloring of the extraction medium and the polar decoloring agent (see tables 9 and 10). The numbers in the column are counted as points in the evaluation. The lower the total number of points (row TOTAL), the higher the color stability (see table 10).

b) **Decoloring of the plastic articles**

The plastic articles produced according to the above exemplary examples 1a to 6a and comparative examples have been decolored according to the following procedure:
For the decoloring of the plastic article, the plastic article is shredded to a fine granulate having a mean particles size of approximately 2 mm. The granulate is exposed to a decoloring bath. The composition of the decoloring bath is given in table 17. The concentrations in table 17 are given with respect to the volume of the decoloring bath.

When using one of the decoloring baths 1 to 3 and 5, the granulate is exposed to the decoloring bath for 60 min at 130 °C. When using the decoloring bath 4 the granulate is exposed to the decoloring bath for 240 min at 130 °C. The ratio of granulate to the amount of decoloring bath is 10g granulates per 250g decoloring bath.

After the above exposure time of the granulate in the decoloring bath and after rapid cooling, the granulates are filtered off with a coarse sieve and thoroughly rinsed with running water and dried at 80 °C for 6h. Again, plastic articles in the form of a plates W x H x T = 30 x 50 x 1 $mm^3$ are produced from the decolorized granulate by injection molding.

The color and the remaining color strength of the plates produced from the decolored granulate are determined by spectrophotometer (for detailed description of the color strength, see section color stability of plastic article).

The decolorability of the plastic articles was determined by measuring the percentage loss of color strength K/S according to Kubelca-Munk of the colored plates before decoloring comparing this value with the color strength of the plastic articles produced from the decolorized granulates. Color strength according to Kubelca-Munk was measured and calculated by the spectrophotometer Konica-Minolta 3600A at max. adsorbance. The remaining color strength is calculated as follows:

$$reamining\ color\ strength = 1 - \frac{(color\ strength\ before - color\ strength\ after)}{color\ strength\ before}\ in\ \%$$

*(before = before decoloring; after = after decoloring and regranulation)*

According to Kubelka-Munk, there is a linear relationship between the color strength and the color content or concentration in a plastic. Therefore, a remaining color strength in percent after decolorisation corresponds to the remaining coloring agent content or the coloring agent concentration after decolorisation.

**Table 17: Composition of decoloring bath**

| Nr. | Polar solvents, nonpolar solvents, and levelling agent in water | Reducing agent | Oxidizing agent | Polar decoloring agent | pH, adjusted by NaOH |
|---|---|---|---|---|---|
| 1 | 4 mL/L mixture of $C_9$-aromatic hydrocarbon (70%), Benzyl benzoate (20%), Na-alkyl benzenesulfonate ($C_{10}$ - $C_{13}$) (8%), *Iso*-tridecanolethoxylate (2%)<br>100 mL/L caustic soda lye (NaOH) 38 °Bé in water; concentration of NaOH: 1,1 mol/L | 5 g/L formamidine sulfinic acid | - | - | > 12 |
| 2 | 4 mL/L mixture of $C_9$-aromatic hydrocarbon (70%), Benzyl benzoate (20%), Na-alkyl benzenesulfonate ($C_{10}$ - $C_{13}$) (8%), *Iso*-tridecanolethoxylate (2%)<br>25 mL/L Butyl acetate 25 mL/L Glycerin triacetate | 7,5 g/L zinc hydroxym ethane-sulfinate | - | - | > 12 |
| 3 | 4 mL/L mixture of $C_9$-aromatic hydrocarbon (70%), Benzyl benzoate (20%), Na-alkyl benzenesulfonate ($C_{10}$ - $C_{13}$) (8%), *Iso*-tridecanolethoxylate (2%)<br>100 mL/L caustic soda lye (NaOH) 38 °Bé in water; concentration of NaOH: 1,1 mol/L | - | 10 g/L peroxidisulfate<br>10g/L tetraacetyl-ethylenediamin | - | > 12 |
| 4 | 4 mL/L mixture of $C_9$-aromatic hydrocarbon (70%), Benzyl benzoate (20%), Na-alkyl benzenesulfonate ($C_{10}$ - $C_{13}$) (8%), *Iso*-tridecanolethoxylate (2%) | - | - | 20g/L of poly (amidoamine-co-acrylic acid) copolymer in form of particles having a mean particle size diameter of 1 mm | > 12 |
| 5 | 4 mL/L mixture of $C_9$-aromatic hydrocarbon (70%), Benzyl benzoate (20%), Na-alkyl benzenesulfonate ($C_{10}$ - $C_{13}$) (8%), *Iso*-tridecanolethoxylate (2%)<br>100 mL/L caustic soda lye (NaOH) 38 °Bé in water; concentration of NaOH: 1,1 mol/L | - | - | - | > 12 |

**Decoloring of Examples 1a to 1d**

Plastic articles produced according to examples 1a to 1d are decolored with the decoloring bath Nr. 2 and the decoloring bath Nr. 4.

Decoloring with decoloring bath Nr.2 of Example 1a

For the decoloring of the plastic article produced according to example 1a, the above-described procedure is performed with the decoloring bath Nr. 2.

The plates produced from the decolored granulates are slightly reddish - CIELab: 76/34/14; RGB: 255/163/163 determined by spectrophotometer and show nearly the same coloration (Δ(remaining color strength) ≤ 50%) as the plates produced from the decolored granulate of the comparative example 1b when decolored with the decoloring bath Nr. 2.

The remaining color agent in the decolorized plates produced from the decolored granulates was less than 20 wt.-%, based on 100 wt.-% of the color agent of the colored plastic article before decolorization.

Decoloring with decoloring bath Nr.2 of Example 1b

The plates from the comparative example 1b were subjected to the same decolorization procedure as example 1a. A slightly lower residual coloration compared to 1a was found - CIELab: 79/27/20; RGB: 255/175/159 in the plates produced from the decolored granulates, determined by spectrophotometer.

The remaining color agent in the in the plates produced from the decolored granulates was less than 20 wt.-%, based on 100 wt.-% of the color agent of the colored plastic article before decolorization.

Decoloring with decoloring bath Nr.2 of Example 1c and 1d

The plates from the comparative examples 1c and 1d were subjected to the same decolorization procedure as example 1a. The plates produced from the decolored granulates retain their color and are almost not decolorized.

The remaining color agent in the in the plates produced from the decolorized granulates was more than 90 wt.-%, based on 100 wt.-% of the color agent of the colored plastic article before decolorization.

Decoloring with decoloring bath Nr.4 of Example 1a

For the decoloring of the plastic article produced according to example 1a, the above-described procedure is performed with the decoloring bath Nr. 4.

The plates produced from the decolored granulates are slightly reddish - CIELab: 66/53/29; RGB: 255/116/110 determined by spectrophotometer and show nearly the same coloration (Δ(remaining color strength) ≤ 50%) as the plates produced from the decolored granulate of the comparative example 1b when decolored with the decoloring bath Nr. 4.

The remaining color agent in the decolorized plates produced from the decolored granulates was less than 20 wt.-%, based on 100 wt.-% of the color agent of the colored plastic article before decolorization.

Decoloring with decoloring bath Nr.4 of Example 1b

The plates from the comparative example 1b were subjected to the same decolorization procedure as example 1a. A slightly lower residual coloration compared to 1a was found - CIELab: 69/44/34; RGB: 255/133/109 in the plates produced from the decolored granulates, determined by spectrophotometer.

The remaining color agent in the in the plates produced from the decolored granulates was less than 20 wt.-%, based on 100 wt.-% of the color agent of the colored plastic article before decolorization.

Decoloring with decoloring bath Nr.4 of Example 1c and 1d

The plates from the comparative examples 1c and 1d were subjected to the same decolorization procedure as example 1a. The plates produced from the decolored granulates retain their color and are almost not decolorized.

The remaining color agent in the in the plates produced from the decolorized granulates was more than 90 wt.-%, based on 100 wt.-% of the color agent of the colored plastic article before decolorization.

**Decoloring of Examples 2a, 2b, 2c, 2d**

Plastic articles produced according to examples 2a, 2b, 2c and 2d are decolored with the decoloring bath Nr. 3.

Decoloring with decoloring bath Nr.3 of Example 2a

For the decoloring of the plastic article produced according to example 2a, the above-described procedure is performed with the decoloring bath Nr. 3.

The plates produced from the decolored granulates are slightly reddish - CIELab: 84/22/8; RGB: 255/193/194 determined by spectrophotometer and show nearly the same coloration (Δ(remaining color strength) ≤ 50%) as the plates produced from the decolored granulate of the comparative example 2b, when decolored with decoloring bath Nr.3.

The remaining color agent in the plates produced from the decolorized granulates was less than 20 wt.-%, based on 100 wt.-% of the color agent of the colored plastic article before decolorization.

Decoloring with decoloring bath Nr. 3 of Example 2b

The plates from the comparative example 2b were subjected to the same decolorization procedure with decoloring bath Nr. 3 as example 2a. A slightly lower residual coloration compared to 2a was found - CIELab: 90/70/30; RGB: 255/193/172, determined by spectrophotometer.

The remaining color agent in the plates produced from the decolorized granulates was less than 20 wt.-%, based on 100 wt.-% of the color agent of the colored plastic article before decolorization.

Decoloring with decoloring bath Nr. 3 of Example 2c and 2d

The plates from the comparative examples 2c and 2d were subjected to the same decolorization procedure as example 2a with decoloring bath Nr. 3. The plates produced from the decolorized granulates retain their color and are almost not decolorized.

The remaining color agent in the plates produced from the decolorized granulates was more than 90 wt.-%, based on 100 wt.-% of the color agent of the colored plastic article before decolorization.

**Decoloring of Examples 3a, 3b, 3c, 3d**

Plastic articles produced according to examples 3a, 3b, 3c and 3d are decolored with the decoloring bath Nr. 1.

Decoloring with decoloring bath Nr.1 of Example 3a

For the decoloring of the plastic article produced according to example 3a, the above-described procedure is performed with the decoloring bath Nr. 1.

The plates produced from the decolorized granulates are slightly yellowish - CIELab: 97/-9/36; RGB: 255/249/175 determined by spectrophotometer and show nearly the same coloration (Δ(remaining color strength) ≤ 50%) as the plates produced from the decolorized granulate of the comparative example 3b, when decolored with decoloring bath Nr. 1.

The remaining color agent in the plates produced from the decolorized granulates was less than 20 wt.-%, based on 100 wt.-% of the color agent of the colored plastic article before decolorization.

Decoloring with decoloring bath Nr.1 of Example 3b

The plates from the comparative example 3b were subjected to the same decolorization procedure with decoloring bath Nr. 1 as example 3a. A slightly lower residual coloration compared to 3a was found - CIELab: 97/-7/31; RGB: 254/247/184, determined by spectrophotometer.

The remaining color agent in the plates produced from the decolorized granulates was less than 20 wt.-%, based on 100 wt.-% of the color agent of the colored plastic article before decolorization.

Decoloring with decoloring bath Nr.1 of Example 3c and 3d

The plates from the comparative examples 3c and 3d were subjected to the same decolorization procedure with decoloring bath Nr. 1 as example 3a. The plates produced from the decolorized granulates retain their color and are almost not decolorized.

The remaining color agent in the plates produced from the decolorized granulates was more than 90 wt.-%, based on 100 wt.-% of the color agent of the colored plastic article before decolorization.

**Decoloring of Examples 4a, 4c**

Plastic articles produced according to examples 4a, and 4c are decolored with the decoloring bath Nr. 1 and the decoloring bath Nr. 2.

Decoloring with the decoloring bath Nr. 1 of Example 4a

For the decoloring of the plastic article produced according to example 4a, the above-described procedure is performed with the decoloring bath Nr. 1.

The plates produced from the granulates are slightly greenish - CIELab: 86/1-18/13; RGB: 189/224/189 determined by spectrophotometer.

The remaining color agent in the plates produced from the decolorized granulates was less than 20 wt.-%, based on 100 wt.-% of the color agent of the colored plastic article before decolorization.

Decoloring with the decoloring bath Nr. 1 of Example 4c

The plates from the comparative example 4c were subjected to the same decolorization procedure as example 4a. The plates produced from the decolorized granulates retain their color and are almost not decolorized.

The remaining color agent in the plates produced from the decolorized granulates was more than 90 wt.-%, based on 100 wt.-% of the color agent of the colored plastic article before decolorization.

Decoloring with the decoloring bath Nr. 2 of Example 4a

For the decoloring of the plastic article produced according to example 4a, the above-described procedure is performed with the decoloring bath Nr. 2.

The plates produced from the granulates are slightly greenish - CIELab: 90/-15/13; RGB: 207/233/200 determined by spectrophotometer.

The remaining color agent in the plates produced from the decolorized granulates was less than 20 wt.-%, based on 100 wt.-% of the color agent of the colored plastic article before decolorization.

Decoloring with the decoloring bath Nr. 2 of Example 4c

The plates from the comparative example 4c were subjected to the same decolorization procedure as example 4a. The plates produced from the decolorized granulates retain their color and are almost not decolorized.

The remaining color agent in the plates produced from the decolorized granulates was more than 90 wt.-%, based on 100 wt.-% of the color agent of the colored plastic article before decolorization.

**Decoloring of Examples 5a, 5c**

Plastic articles produced according to examples 5a and 5c are decolored with the decoloring bath Nr. 1 and the decoloring bath Nr. 2.

Decoloring with the decoloring bath Nr. 1 of Example 5a

For the decoloring of the plastic article produced according to example 5a, the above-described procedure is performed with the decoloring bath Nr. 1.

The plates produced from the granulates are slightly blueish - CIELab: 78/-4/-19; RGB: 164/197/228 determined by spectrophotometer.

The remaining color agent in the plates produced from the decolorized granulates was less than 20 wt.-%, based on 100 wt.-% of the color agent of the colored plastic article before decolorization.

Decoloring with the decoloring bath Nr. 1 of Example 5c

The plates from the comparative example 5c were subjected to the same decolorization procedure as example 5a. The plates produced from the decolorized granulates retain their color and are almost not decolorized.

The remaining color agent in the plates produced from the decolorized granulates was more than 90 wt.-%, based on 100 wt.-% of the color agent of the colored plastic article before decolorization.

Decoloring with the decoloring bath Nr. 2 of Example 5a

For the decoloring of the plastic article produced according to example 5a, the above-described procedure is performed with the decoloring bath Nr. 2.
The plates produced from the granulates are slightly blueish - CIELab: 86/-5/-10; RGB: 194/218/232 determined by spectrophotometer.
The remaining color agent in the plates produced from the decolorized granulates was less than 20 wt.-%, based on 100 wt.-% of the color agent of the colored plastic article before decolorization.

Decoloring with the decoloring bath Nr. 1 of Example 5c

The plates from the comparative example 5c were subjected to the same decolorization procedure as example 5a. The plates produced from the decolorized granulates retain their color and are almost not decolorized.
The remaining color agent in the plates produced from the decolorized granulates was more than 90 wt.-%, based on 100 wt.-% of the color agent of the colored plastic article before decolorization.

**Decoloring of Examples 6a, 6b, 6c, 6d**

Plastic articles produced according to examples 6a to 6d are decolored with the decoloring bath Nr. 5.

Decoloring with decoloring bath Nr. 5 of Example 6a

For the decoloring of the plastic article produced according to example 6a, the above-described procedure is performed with the decoloring bath Nr. 5.
The plates produced from the decolored granulates are slightly reddish - CIELab: 87/17/9; RGB: 255/205/201 determined by spectrophotometer and show nearly the same coloration ($\Delta$(remaining color strength) $\leq$ 50%) as the plates produced from the decolored granulate of the comparative example 6b when decolored with the decoloring bath Nr. 5.
The remaining color agent in the decolorized plates produced from the decolored granulates was less than 20 wt.-%, based on 100 wt.-% of the color agent of the colored plastic article before decolorization.

Decoloring with decoloring bath Nr.5 of Example 6b

The plates from the comparative example 6b were subjected to the same decolorization procedure as example 6a. A slightly lower residual coloration compared to 6a was found - CIELab: 90/11/11; RGB: 255/218/205 in the plates produced from the decolored granulates, determined by spectrophotometer.
The remaining color agent in the in the plates produced from the decolored granulates was less than 20 wt.-%, based on 100 wt.-% of the color agent of the colored plastic article before decolorization.

Decoloring with decoloring bath Nr.5 of Example 6c and 6d

The plates from the comparative examples 6c and 6d were subjected to the same decolorization procedure as example 6a. The plates produced from the decolored granulates retain their color and are almost not decolorized.
The remaining color agent in the in the plates produced from the decolorized granulates was more than 90 wt.-%, based on 100 wt.-% of the color agent of the colored plastic article before decolorization.
The following table 18 summarizes the results found for the decoloration process.

| Table 18 | | | | |
|---|---|---|---|---|
| **Example** | **1a** | **1b** | **1c** | **Id** |
| Remaining K/S Decoloring bath Nr. 2 | 13% | 14% | >90% | > 90% |
| Remaining K/S Decoloring bath Nr. 4 | 19% | 19% | >90% | >90% |

(continued)

| Example | 2a | 2b | 2c | 2d |
|---|---|---|---|---|
| Remaining K/S Decoloring bath Nr. 3 | 14% | 13% | >90% | >90% |
| **Example** | **3a** | **3b** | **3c** | **3d** |
| Remaining K/S Decoloring bath Nr. 1 | 18% | 17% | >90% | >90% |
| **Example** | **4a** | | **4c** | |
| Remaining K/S Decoloring bath Nr. 1 | 19% | | >90% | |
| Remaining K/S Decoloring bath Nr. 2 | 12% | | >90% | |
| **Example** | **5a** | | **5c** | |
| Remaining K/S Decoloring bath Nr. 1 | 19% | | >90% | |
| Remaining K/S Decoloring bath Nr. 2 | 14% | | >90% | |
| **Example** | **6a** | **6b** | **6c** | **6d** |
| Remaining K/S Decoloring bath Nr. 5 | 11% | 14% | >90% | > 90% |

As the results clearly show, the color stability of the plastic article is enhanced by using the alkali clearable dye instead of the hydrolyzed form of the alkali clearable dye, without affecting the decolorability of the plastic article.

## Claims

**1.** Color masterbatch for producing colored plastic articles, wherein the color masterbatch comprises:

- at least one carrier,
- at least one coloring agent, and
- at least one water-soluble and/or water-swellable component;

wherein the at least one carrier is an organic polymer having a molecular weight Mw ≥ 1000 g/mol and wherein the organic polymer is insoluble in water,
wherein an amount of the water-soluble and/or water-swellable component in the color masterbatch is ≥ 1 wt% to ≤ 50 wt%, based on the total weight of the color masterbatch,
wherein the coloring agent is an alkali clearable dye, and
wherein a weight ratio of the coloring agent to the water-soluble and/or water-swellable component in the color masterbatch is 1:2 to 1:200.

**2.** The color masterbatch according to claim 1, wherein the at least one carrier is selected from the group comprising thermoplastic and thermoplastic elastomer and/or the carrier is not a thermosetting polymer.

**3.** The color masterbatch according to claim 1 or 2, wherein the alkali clearable dye is an organic molecule comprising at least one functional group selected from carboxylic ester group, phtalimide group, fluorosulfonyl group, thiophene group and nitrothiophene group.

**4.** The color masterbatch according to any of the previous claims, wherein the alkali clearable dye is an organic molecule having an aromatic structure and/or a diazinyl group and/or wherein the alkali clearable dye has a molecular weight Mw in the range of about ≥ 250 g/mol to about ≤ 800 g/mol.

**5.** The color masterbatch according to any of the previous claims, wherein the water-soluble and/or water-swellable component is a water-soluble polymer, a water-swellable compound, a disintegrating agent, or a mixture thereof, wherein

- the water-soluble polymer has a molecular weight Mw ≥ 1000 g/mol, wherein the water-soluble polymer has a weight loss of more than 2 wt% when stored in water at 23°C for 24 hours or when emerged in boiling water

for 30 min; and/or the water-soluble polymer has a molecular weight Mw ≥ 1000 g/mol and is selected from the group comprising polyelectrolytes, non-ionic homopolymers, hydrophobic-associating polymers, and water soluble polysiloxanes;

- the water-swellable compound is an inorganic compound or is a polymer having a molecular weight Mw ≥ 1000 g/mol and wherein the water swellable compound has a swelling capacity of ≥ 25 wt%, according to ASTM D570 and/or ISO 62; and/or the water-swellable compound is selected from the group comprising bentonite, preferably montmorillonite; cross-linked poly acrylamide and its copolymers, starch, cellulose, cellulose derivatives, crosscarmellose, sodium croscarmellose, crospovidone, sodium starch glycolate, alginic acids, dextrans and cross-linked polyvinylpyrrolidones, cross-linked poly(vinyl alcohol) and copolymers, cross-linked polyethylene oxide and starch grafted copolymer of polyacrylonitrile;
- the disintegrating agent has a molecular weight Mw≥ 1000 g/mol, wherein the disintegrating agent has a weight loss of more than 2 wt% when stored in water having a pH ≥ 10 or a pH ≤ 4 for 24 hours at 80°C; and/or the disintegrating agent is selected from the group comprising poly glycolide, polylactide, poly hydroxy propionate, poly hydroxy butyrate, poly ε-caprolactone, glycolized or amorphous aliphatic-aromatic polyesters, glycolized or amorphous polyethylene terephthalate (PET-G or A-PET), polytrimethylenterephthalte (PTT), polybutylenterephthalate (PBT), poly acrylate-acrylic acid copolymers soluble at a pH ≥ 10, and blends of poly acrylate-acrylic acid copolymers with poly ethylene acrylic acids soluble at a pH ≥ 10.

**6.** The color masterbatch according to any of the previous claims, wherein the color masterbatch further comprises in an amount of ≥ 0.1 wt% to ≤ 25 wt% based on the total weight of the color masterbatch

- an organic acid having a melting point $T_m$ > 100 °C and a solubility in double-distilled water and/or alkaline solution > 0.1 kg/L at 25 °C, such as tartaric acid, citric acid; amino- or hydroxy- substituted straight, branched, saturated and/or unsaturated, aliphatic C5 to C9 carboxylic acids such as hydroxyvaleric acid and hydroxycaproic acid, C4 to C7 dicarbonic acids like glutaric acid or adipic acid; and/or
- a salt selected from the group comprising

a) inorganic salts of alkali metals, alkaline earth metals, and/or elements of the $3^{rd}$ main group of the PSE such as sodium chloride and sodium nitrate;
b) organic salts of alkali metals and/or alkaline earth metals of carboxylic acids such as acetate, citrate, tartrate, and branched, saturated and/or unsaturated, aliphatic C5 to C9 carboxylic acids such as valeric acid and caproic acid; and
c) hydroxides of alkali metals, alkaline earth metals, and aluminum, such as NaOH, $Mg(OH)_2$, and $Al(OH)_3$.

**7.** The color masterbatch according to any of the previous claims, wherein the color masterbatch further comprises in an amount of ≥ 0.1 wt% to ≤ 10 wt% based on the total weight of the color masterbatch a gas generator selected from the group comprising hydrogen carbonates and carbonates such as $NaHCO_3$ and $Na_2CO_3$.

**8.** The color masterbatch according to any of the previous claims, wherein the color masterbatch further comprises a crosslinking agent in an amount of ≥ 0.1 wt% to ≤ 10 wt%, based on the total weight of the color masterbatch, wherein the crosslinking agent is selected from the group comprising glycidyl acrylates copolymers, maleic acid anhydride copolymers, polymers and copolymers grafted with maleic acid anhydride, like of PE, PP or EMA grafted with maleic anhydride, glyoxal, glyoxal resins, polyamidoamin epichlohydrine, modified or non-modified melamine formaldehyde resins, Ti-lactate, boric acid, sodium aluminate, ammonium zirconium carbonate and polyvalent cations such as $Ca^{2+}$, $Mg^{2+}$ or $Al^{3+}$.

**9.** The color masterbatch according to any of the previous claims, wherein the color masterbatch further comprises a dispersing agent in an amount of ≥ 0.0005 wt% to ≤ 50 wt%, based on the total weight of the color masterbatch, wherein the dispersing agent is selected from the group comprising ionic dispersing agents, and non-ionic dispersing agents.

**10.** Mixture comprising a color masterbatch according to any of claims 1 to 10 and a plastic basis material in a weight ratio of 20:80 to 1:99 (color masterbatch: plastic basis material), wherein the plastic basis material comprises at least one basis polymer having a molecular weight Mw ≥ 1000 g/mol.

**11.** Mixture according to claim 11, wherein the plastic basis material is selected from the group comprising thermoplastic and thermoplastic elastomer and/or the plastic basis material is not a thermosetting polymer; and/or
the basis polymer is selected from the group comprising thermoplastic and thermoplastic elastomer and/or the basis

polymer is not a thermosetting polymer.

**12.** Method for producing a colored plastic article comprising the steps:

a) Mixing a color masterbatch according to any of claims 1 to 10 with a plastic basis material in an extruder in a weight ratio of 20:80 to 1:99 (color masterbatch: plastic basis material), wherein the plastic basis material comprises at least one basis polymer having a molecular weight Mw ≥ 1000 g/mol, or
b) Providing a mixture according to claim 11 or 12 in an extruder, and
c) Forming the colored plastic article by a polymer processing technique.

**13.** The method according to claim 13, wherein the polymer processing technique is selected from thermoplastic processing techniques, such as injection molding, compression molding, calendaring, extrusion, film extrusion processing method, blown cast processing method, calandered films processing method, thermoforming sheets processing method, foam extrusion processing method, profile extrusion processing method, injection blow molding processing method, injection stretch blow molding processing method, compression molding processing method, extruding processing method, thermoforming processing method, blowing processing method and/or 3D-printing processing method.

**14.** Colored plastic article produced by a method according to any of claims 13 to 14.

**15.** Colored plastic article comprising

- a plastic basis material comprising at least one basis polymer,
- at least one carrier,
- at least one coloring agent,
- at least one water-soluble and/or water-swellable component,

wherein the amount of the plastic basis material in the colored plastic article is ≥ 80 wt% to ≤ 99 wt%, based on the total weight of the colored plastic article,
wherein the amount of the at least one water-soluble and/or water-swellable component in the colored plastic article is ≥ 0.01 wt% to ≤ 10 wt%, based on the total weight of the colored plastic article,
wherein the at least one basis polymer and the at least one carrier is an organic polymer having a molecular weight Mw ≥ 1000 g/mol and wherein the carrier is insoluble in water,
wherein the coloring agent is an alkali clearable dye, and
wherein a weight ratio of the coloring agent to the water-soluble and/or water-swellable component in the colored plastic article is 1:2 to 1:200.

**16.** Colored plastic article according to claim 15 or 16, wherein the plastic article is color stable under any or any combination of the following conditions:

- exposure to water for 10 h at 60 °C;
- exposure to ethanol 95 % for 2 h at 40 °C;
- exposure to a 0,1% alkaline solution of $NaHCO_3$ for 2 h at 60 °C
- exposure to a 3% acid solution of acetic acid for 2 h at 60 °C;
- exposure to a solution of 20 % ethanol and 3 % acetic acid in water for 2 h at 50°C;
- exposure to a solution of 20 % ethanol and 3% acetic acid in water for 24 h at 40 °C;
- fastness to washing according to DIN EN ISO 105-C06 C2S;
- fastness to perspiration according to DIN EN ISO 105-E04.

**17.** Colored plastic article according to any one of claims 15 to 17, wherein the plastic article is color stable under the food safety requirements defined by any or any combination of the following norms: DIN 16524-2, CEI 05-59; DIN 16524-1 to DIN 16524-3, JN 16-80; DIN 10955; DIN 16524-3, CEI 11-60; DIN 16524-3, CEI 08-60; CEI 20-80; JN 17-80; DIN 16525, CEI 19-79; DIN 16524-1; DIN 53415; DIN 16524-3, CEI 10-60; DIN 53375; CEI 18-77; DIN 16524-2, CEI 06-59; DIN 16524-3, CEI 09-60; DIN 53415; DIN 16524-2, CEI 07-59; and DIN 16524-1, CEI 03-59.

**18.** Colored plastic article according to any one of claims 15 to 18, wherein the plastic article is selected from the group comprising a sheet, a foil, a container, a part, a tube, a profile, a nonwoven fabric, and preferably the article is selected from the group comprising rigid packaging such as bottles, jars, caps and closures, color coded packaging and containers of all types, including ones for industrial components, computer face-plates, keyboards, bezels and

cellular phones, residential and commercial lighting fixtures and components therefor, such as sheets, used in building and in construction, tableware, including plates, cups and eating utensils, small appliances and their components, optical and sun-wear lenses, as well as decorative films including such films that are intended for use in film insert molding.

**19.** Method for decoloring a colored plastic article according to any of claims 15 to 19, comprising the steps of

a) shredding the colored plastic article to a granulate and/or a powder,
b) exposing the granulate and/or powder to a decoloring bath for about ≥ 1 minute to about ≤ 240 minutes, wherein the decoloring bath has a temperature above a glass transition temperature $T_g$ of the colored plastic article and below a melting temperature $T_m$ of the colored plastic article and/or has a temperature ≥ 80 °C to ≤ 130 °C,
wherein the decoloring bath comprises

- water, and
- at least one polar solvent,

wherein the decoloring bath has a pH about ≥ 10, and wherein the pH of the decoloring bath is adjusted by adding a base, preferably NaOH.

**20.** The method according to claim 19, wherein the decoloring bath further comprises an oxidizing agent or a reducing agent and/or a polar decoloring agent.

**21.** Method according to claim 20, wherein the decoloring bath comprises the polar decoloring agent and wherein the decoloring bath contains 0.1 to 100 g/L polar decoloring agent, preferably 1 to 50 g/L, more preferably 5 to 25 g/L with respect to the volume of the decoloring bath.

**22.** The method according to any of claims 19 to 21, wherein the polar solvent is liquid at about 23 °C and is selected from polar organic solvents; wherein the polar organic solvent is selected from the group comprising $C_1$ to $C_6$ - alcohol, preferably ethanol and isopropanol, glycols such as diethylene glycol and its oligomers, $C_3$ to $C_6$ - ketone, preferably acetone, $C_2$ to $C_6$ - aldehyde, $C_1$ to $C_6$ - carboxylic acid, such as formic acid, and derivatives of $C_1$ to $C_6$ - carboxylic acids such as acid chlorides or acid amides, other polar solvents liquid at 23 °C, preferably dimethylsulfoxide (DMSO), dimethylformamide (DMF), benzylic alcohols such as benzyl alcohol, linear or cyclic aliphatic ethers, preferably diethyl ether, diisopropyl ether, dibutyl ether or tetrahydrofuran, aliphatic esters such as methyl acetate, ethyl acetate, butyl acetate, glycerin triacetate, acetyltributylcitrate (ATBC), halogenated solvents such as dichloromethane or trichloromethane or benzyl chloride.

**23.** The method according to any of claims 19 to 22, wherein the decoloring bath further comprises a nonpolar solvent, wherein the nonpolar solvent is liquid at about 23 °C and is selected from nonpolar organic solvents; wherein the nonpolar organic solvent is selected from the group comprising straight, branched, saturated, unsaturated, and/or cyclic aliphatic $C_5$ to $C_{12}$ hydrocarbons, and aromatic $C_6$ to $C_{12}$ hydrocarbons.

**24.** Method according to any of claims 20 to 23, wherein the reducing agent is selected from the group comprising

- hydrogen in combination with precious metal catalyst, preferably $H_2$/Ni, $H_2$/Pd, $H_2$/Pt, hydrides;
- complex hydrides, preferably sodium hydride NaH, lithium aluminum hydride $LiAlH_4$, borohydride salts $NaBH_4$;
- base metals, preferably Li, Na, Mg, Zn; low-valent nitrogen;
- phosphorus and sulphur compounds, preferably amidine sulfonic acid, formamidine sulphinic acid, hydrogen sulfide, sodium sulfide, $S^{2-}$, $Na_2S$, sulfites, $SO_2^{-3}$, sodium sulfite, sulfurous acid, sulfur dioxide, thiosulphate, sodium dithionite, sodium bisulfite, $NaHSO_3$, formamidine sulfonic acid, zinc hydroxymethanesulfinate, sodium hydroxymethanesulfinate also known as rongalite, thiourea dioxide also known as thiox, sulfonic acid and its derivatives, sodium carbonate, sodium bicarbonate, sodium oxide, calcium oxide;
- sulfinic acid and sulfinic acid derivates, preferably aminoimino methansulfinic acid;
- glucose mixtures with dispersants; and
- formamidine sulphinic acid and zinc hydroxymethanesulfinate.

**25.** Method according to any of claims 20 to 24, wherein the oxidizing agent is selected from the group comprising peroxide, peroxyacetic acid, hydrogen peroxide, peroxodisulfate, ozone, sodium percarbonate, sodium perborate,

m-Nitrobenezenesulfonate, $H_2SO_4$, $HNO_3$, oxygen-containing anions (oxo anions) of transition metals in high oxidation states such as permanganate $MnO_4^-$, $KMnO_4$, phosphate, oxygen difluoride fluorine, cryptone difluoride, dichromate $Cr_2O_7^{2-}$ , metal ions such as $Ce^{4+}$, noble metal ions such as those of silver and copper, anions of halo-oxygen acids such as bromat $BrO_3^-$, halogens, such as fluorine, chlorine, bromine and iodine, hypochlorite, sodium hypochlorite, and/or potassium hypochlorite; hypochlorous acid.

**26.** Method according to any of claims 20 to 25, wherein the polar decoloring agent is selected from the group comprising

- at least one polar-polymer having a Mw of about ≥ 1000 g/mol, and/or
- at least one polar compound having a Mw of about < 1000 g/mol,

wherein the polar-polymer comprises at least ≥ 5 wt.-% of heteroatoms, based on the weights of the polar-polymer, and wherein the polar compound comprises at least ≥ 5 wt.-% of heteroatoms, based on the weight of the polar compound,
wherein heteroatoms are any atom excluding C-atoms and H-atoms.

**27.** Method according to any of claims 19 to 26, wherein the decoloring bath comprises a levelling agent selected from the group comprising aromatic esters such as benzoic acid esters such as benzyl benzoate, alkyl benzoates such as methyl or ethyl benzoate, naphthalic acid esters, phthalic acid esters, polyphenylether, phenoles, aromatic alcohols, aromatic ketones, aryl halides, such as halogenized benzene, halogenzide toluene; N-alkylphthalimide, methylnaphthaline, diphenyle, diphenylether, naphtholether, and oxybiphenyle.

**28.** Method according any of claims 19 to 27, wherein the colored plastic article is shredded to a granulate and/or powder having a mean particle size of 0.1 mm to 20 mm.

**29.** Method according to any of claims 19 to 28, wherein a weight ratio of the granulate and/or powder to the decoloring bath is 1:2 to 1:50 (granulate and/or powder : decoloring bath).

Europäisches Patentamt
European Patent Office
Office européen des brevets

# EUROPEAN SEARCH REPORT

Application Number
EP 21 18 1387

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2005/054351 A1 (COLORMATRIX EUROPE LTD [GB]; ZENG FUQUAN [GB]) 16 June 2005 (2005-06-16) * page 1, paragraph 1 * * page 11, paragraph 2 * * page 18, paragraph 3 * * claims 1, 4, 15, 21, 44 * ----- | 1-29 | INV. C08J3/20 C08J3/22 C08J11/06 |
| A | US 2006/148914 A1 (CONNOR DANIEL M [US] ET AL) 6 July 2006 (2006-07-06) * claims 1, 4-6, 17, 24, 28 * ----- | 1-29 | |
| A | JAVAD MOKHTARI ET AL: "Novel hydrolysable azo disperse dyes based on N-ester-1,8-naphthalimide: dyeing of polyester?cotton blends", COLORATION TECHNOLOGY, WILEY, vol. 124, no. 5, 14 October 2008 (2008-10-14), pages 295-300, XP001577950, ISSN: 1472-3581, DOI: 10.1111/J.1478-4408.2008.00155.X [retrieved on 2008-10-14] * the whole document * ----- | 1-29 | TECHNICAL FIELDS SEARCHED (IPC): C08J C09J |

The present search report has been drawn up for all claims

1

| Place of search | Date of completion of the search | Examiner |
|---|---|---|
| Munich | 25 November 2021 | Vandoolaeghe, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 21 18 1387

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2021

| Patent document cited in search report | Publication date | Patent family member(s) | Publication date |
|---|---|---|---|
| WO 2005054351 A1 | 16-06-2005 | GB 2408047 A | 18-05-2005 |
| | | WO 2005054351 A1 | 16-06-2005 |
| US 2006148914 A1 | 06-07-2006 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *CHEMICAL ABSTRACTS*, 68248-10-2
- *CHEMICAL ABSTRACTS*, 71872-49-6
- *CHEMICAL ABSTRACTS*, 5261-31-4
- *CHEMICAL ABSTRACTS*, 58547-80-1
- *CHEMICAL ABSTRACTS*, 149850-30-6
- *CHEMICAL ABSTRACTS*, 70528-90-4
- *CHEMICAL ABSTRACTS*, 71627-50-9